# EUROPEAN PATENT APPLICATION

(11) **EP 2 693 378 A1**
(43) Date of publication of application: **05.02.2014**
(21) Application number: 12763797.3
(22) Date of filing: 23.03.2012
(51) Int. Cl.: G06Q 10/06

(54) **RISK-MANAGEMENT DEVICE**

(30) Priority: 29.03.2011 JP 2011072744
(71) Applicant: NEC Corporation, Tokyo 108-8001 (JP)
(72) Inventor: MORINAGA, Satoshi, Tokyo 108-8001 (JP); IMAMURA, Satoru, Tokyo 105-8574 (JP)
(74) Representative: Robson, Aidan John
(86) International application number: PCT/JP2012/002004
(87) International publication number: WO 2012/132353

(57) **Abstract**

A storing unit stores loss data each including a loss amount and loss occurrence frequency, and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter. A processor is programmed to calculate multiplication values, each of which is calculated for each of the loss data and is a multiplication value of the coefficient held in the coefficient table in association with the loss occurrence frequency included in the loss data and the loss amount included in the loss data.

## Description

### TECHNICAL FIELD

The present invention relates to a risk management device, more specifically, relates to a risk management device which has a function of calculating a risk amount from loss data including a loss amount and loss occurrence frequency by a simple method.

### BACKGROUND ART

In general, company business may face various kinds of operational risks (simply referred to as "risk" hereinafter) such as an earthquake, system trouble, a clerical mistake and fraud. Therefore, it is required to weigh the amount of a risk by using a risk weighing device and take measures against the risk.

A risk weighing device inputs therein fragmental information on an unknown risk profile in a company, and weighs a feature value (e.g., a 99.9% value at risk (VaR)) of the risk profile in the company from the input data. Data inputted into the risk weighing device generally includes internal loss data and scenario data. Internal loss data is data on a loss event having actually occurred in the company. Internal loss data shows the contents of events and the loss amounts brought by the respective events. However, it is difficult to obtain a necessary and sufficient number of internal loss data with respect to all event contents. Therefore, with respect to the content of an event which has rarely occurred and the content of an event which has not occurred yet, the values of the occurrence frequency and loss amount thereof are estimated as scenario data and utilized to weigh a risk amount. Hereinafter, internal loss data and scenario data will be collectively referred to as loss data.

A general risk weighing device weighs a VaR by a method called loss distribution approach (e.g., see Patent Document 1 and Non-Patent Document 1). To be specific, firstly, the risk weighing device generates a loss frequency distribution from the number of internal loss data, and so on, and generates a loss scale distribution from internal loss data, scenario data and so on. Next, by Monte Carlo simulation, the risk weighing device repeatedly executes a process of taking out the loss amounts of the number of losses caused by using the abovementioned loss frequency distribution from the abovementioned loss scale distribution, totaling the loss amounts and calculating a loss mount per holding period, ten-thousand or hundred-thousand times, thereby generating a loss amount distribution. Then, the risk weighing device calculates a VaR in a predetermined confidence interval from this generated loss amount distribution.

Patent Document 1: Japanese Patent Publication No. 4241083

Non-Patent Document 1: Kobayashi, Shimizu, Nishiguchi, and Morinaga, "Operational Risk Management," Kinzai Institute for Financial Affairs, Inc., issued on April 24, 2009, pp. 107-144

As mentioned above, a risk weighing device using loss distribution approach generates a frequency distribution and a scale distribution, calculates the total amount of loss occurring per holding period by using the frequency distribution and the scale distribution by Monte Carlo simulation, and finding a VaR. Thus, there is a problem that computation load is heavy though the accuracy is high.

In the field of risk alysis, beyond a situation that a highly accurate VaR is required, there is also a case, such as component analysis, that it is desired to obtain a VaR in a short time though the accuracy can be low somewhat.

### SUMMARY

An object of the present invention is to provide a risk management device which solves the abovementioned problem, namely, a problem that it is difficult to calculate an approximate value of a VaR in a short time.

A risk management device according to an exemplary embodiment of the present invention includes:
a memory for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter; and
a processor connected to the memory,
wherein the processor is programmed to calculate multiplication values, each of which is calculated for each of the loss data and is a multiplication value of the coefficient held in the coefficient table in association with the loss occurrence frequency included in the loss data and the loss amount included in the loss data.

A risk management method according to another exemplary embodiment of the present invention is a risk management method executed by a risk management device which includes a memory for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, and which includes a processor connected to the memory,
the risk management method including:
by the processor, calculating multiplication values, each of which is calculated for each of the loss data and is a multiplication value of the coefficient held in the coefficient table in association with the loss occurrence frequency included in the loss data and the loss amount included in the loss data.

With the configurations described above, the present invention enables rapid calculation of an approximate value of a VaR.

### BRIEF DESCRIPTION OF DRAWINGS

Fig. 1 is a block diagram of a risk management device according to a first exemplary embodiment of the present invention;
Fig. 2 shows an example of the configuration of loss data used in the first exemplary embodiment of the present invention;
Fig. 3 shows an example of the configuration of a coefficient table used in the first exemplary embodiment of the present invention;
Fig. 4 shows an example of the configuration of interim information used in the first exemplary embodiment of the present invention;
Fig. 5 is a flowchart showing an example of processing in the first exemplary embodiment of the present invention;
Fig. 6 is a block diagram of a risk management device according to a second exemplary embodiment of the present invention;
Fig. 7 shows an example of the configuration of element-by-element loss data used in the second exemplary embodiment of the present invention;
Fig. 8 shows an example of the configuration of interim information used in the second exemplary embodiment of the present invention;
Fig. 9 is a flowchart showing an example of processing in the second exemplary embodiment of the present invention;
Fig. 10 is a block diagram of a risk management device according to a third exemplary embodiment of the present invention;
Fig. 11 shows an example of the configuration of first scenario data used in the third exemplary embodiment of the present invention;
Fig. 12 shows an example of the configuration of second scenario data used in the third exemplary embodiment of the present invention;
Fig. 13 shows an example of the configuration of interim information used in the third exemplary embodiment of the present invention;
Fig. 14 is a flowchart showing an example of processing in the third exemplary embodiment of the present invention;
Fig. 15 is a block diagram of a risk management device according to a fourth exemplary embodiment of the present invention;
Fig. 16 shows an example of the configuration of first loss data used in the fourth exemplary embodiment of the present invention;
Fig. 17 shows an example of the configuration of second loss data used in the fourth exemplary embodiment of the present invention;
Fig. 18 shows an example of the configuration of interim information used in the fourth exemplary embodiment of the present invention;
Fig. 19 is a flowchart showing an example of processing in the fourth exemplary embodiment of the present invention;
Fig. 20 is a block diagram of a risk management device according to a fifth exemplary embodiment of the present invention;
Fig. 21 shows an example of the configuration of first loss data used in the fifth exemplary embodiment of the present invention;
Fig. 22 shows an example of the configuration of second loss data used in the fifth exemplary embodiment of the present invention;
Fig. 23 shows an example of the configuration of difference factor information used in the fifth exemplary embodiment of the present invention;
Fig. 24 shows an example of the configuration of interim information used in the fifth exemplary embodiment of the present invention; and
Fig. 25 is a flowchart showing an example of processing in the fifth exemplary embodiment.

### EXEMPLARY EMBODIMENTS

Next, exemplary embodiments of the present invention will be described in detail with reference to the drawings.

### [First Exemplary Embodiment]

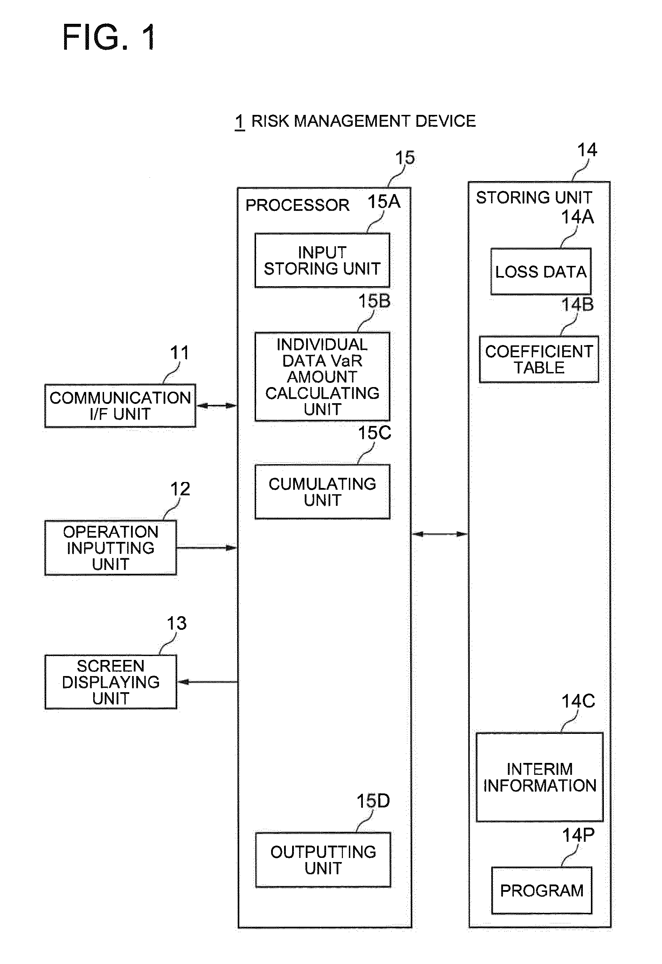

With reference to Fig. 1, a risk management device 1 according to a first exemplary embodiment of the present invention has a function of approximating a VaR based on loss data.

This risk management device 1 has, as major function units, a communication interface unit (referred to as a communication I/F unit hereinafter) 11, an operation inputting unit 12, a screen displaying unit 13, a storing unit 14, and a processor 15.

The communication I/F unit 11 is formed by a dedicated data communication circuit, and has a function of performing data communication with various kinds of devices (not shown in the drawings) connected via a communication line (not shown in the drawings).

The operation inputting unit 12 is formed by an operation input device such as a keyboard and a mouse, and has a function of detecting an operation by an operator and outputting to the processor 15.

The screen displaying unit 13 is formed by a screen display device such as an LCD and a PDP, and has a function of displaying various kinds of information such as an operation menu and a calculation result on a screen in accordance with instructions from the processor 15.

The storing unit 14 is formed by a storage device such as a hard disk and a semiconductor memory, and has a function of storing processing information necessary for various kinds of processing by the processor 15 and a program 14P. The program 14P, which is a program loaded into the processor 15 and executed to realize various kinds of processing units, is previously loaded from an external device (not shown) or a computer-readable storage medium (not shown) via a data input/output function such as the communication I/F unit 11, and is stored into the storing unit 14. Major processing information stored by the storing unit 14 includes loss data 14A, a coefficient table 14B, and interim information 14C.

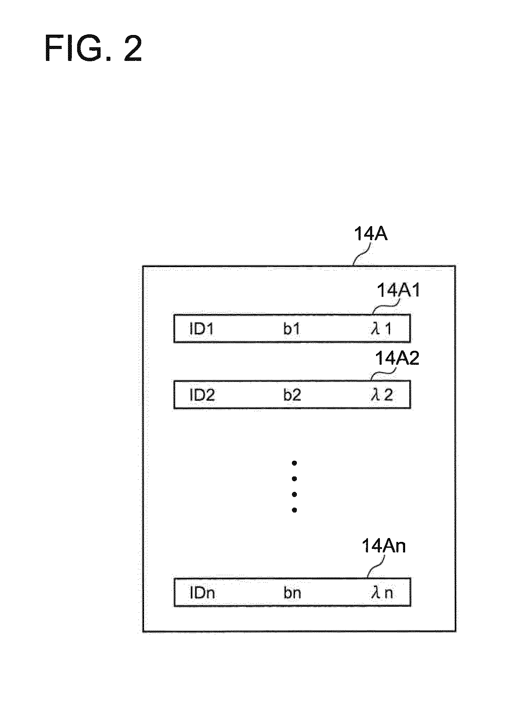

The loss data 14A is data including a loss amount and loss occurrence frequency. Fig. 2 shows an example of the configuration of the loss data 14A. The loss data 14A of this example is composed of n loss data 14A1 to 14An in total. Each loss data has identifier (an ID) for uniquely identifying the loss data, a loss amount b, and loss occurrence frequency λ. The loss data 14A correspond one-to-one to internal loss data and scenario data that are inputs into a risk weighing device as the target of approximation. For example, loss data corresponding to internal loss data "loss amount = 2 million yen, observation period = 5 years" has a content that a loss amount is 2 million yen and loss occurrence frequency is 0.2. Moreover, loss data corresponding to scenario data "mean loss amount = 10 million yen, loss occurrence frequency = 0.1" has a content that a loss amount is 10 million yen and loss occurrence frequency is 0.1.

The coefficient table 14B is a table which holds, in association with loss occurrence frequency, a coefficient equal to the value of the number of occurrences at a lower α% point in a cumulative distribution function of a probability distribution with the loss occurrence frequency as a parameter. The abovementioned "α" is determined in accordance with a confidence interval of a VaR weighed by a risk weighing device as the target of approximation. For example, in a case that a risk weighing device as the target of approximation weighs a 99.9% VaR, α is set to 99.9. Moreover, the abovementioned probability distribution is the same as a probability distribution used for prediction of a frequency distribution in a general risk weighing device. For example, in a general risk weighing device, when a Poisson distribution is used, the abovementioned probability distribution is a Poisson distribution. Because a cumulative distribution function of a Poisson distribution is discontinuous, it is desirable to extend the factorial of integers to the factorial of real numbers by using a gamma function, smooth a cumulative distribution function of a Poisson distribution, and then obtain a coefficient equal to the value of the number of occurrences at a lower α% point.

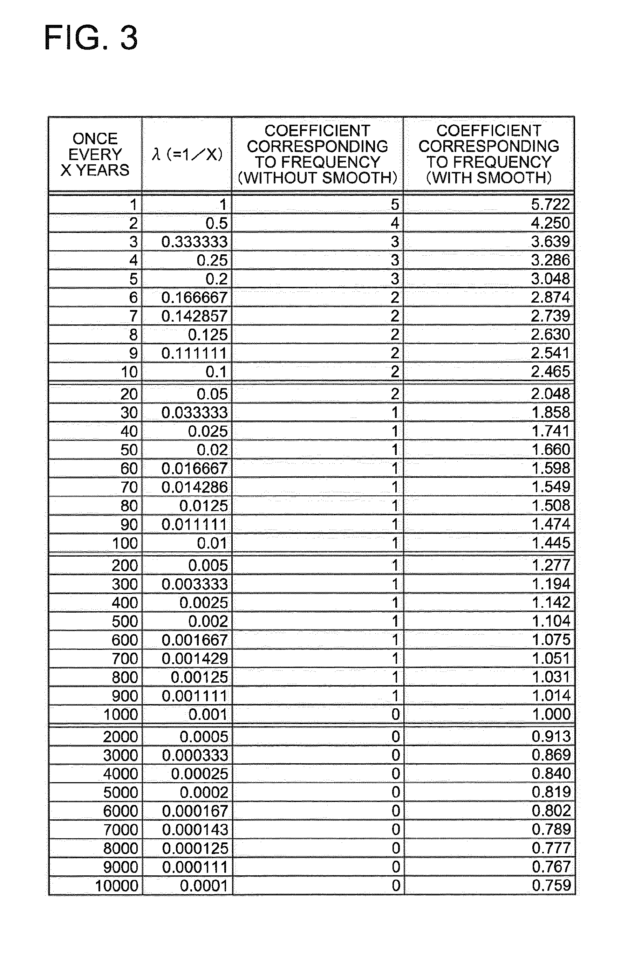

Fig. 3 shows an example of the configuration of the coefficient table 14B. Although the coefficient table 14 of this example includes loss occurrence frequency of two types, namely, every how many years a loss occurs once and how many times a loss occurs in one year, a coefficient table may include only one of the types and the other can be omitted as far as the type of loss occurrence frequency in loss data is uniform. Moreover, although the coefficient table of this example includes coefficients corresponding to loss occurrence frequency of two types, namely, without smooth and with smooth, a coefficient table may include only one of the types. For example, when without-smooth coefficients are not used, it is sufficient to table only with-smooth coefficients.

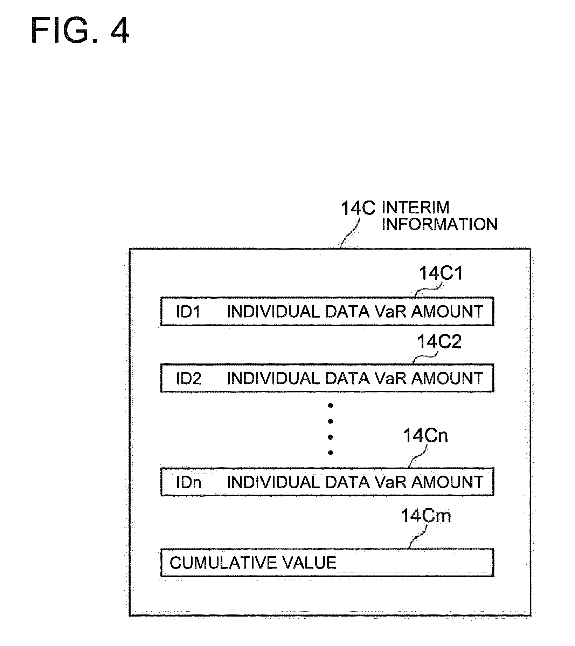

The interim information 14C is interim data or final data generated in the process of operation by the processor 15. Fig. 4 shows an example of the configuration of the interim information 14C. The interim information 14C of this example has individual data VaR amounts 14C1 to 14Cn corresponding one-to-one to the loss data 14A1 to 14An, and a cumulative value 14Cm that is the sum of the individual data VaR amounts 14C1 to 14Cn.

The processor 15 has a microprocessor such as a CPU and a peripheral circuit thereof, and has a function of loading the program 14P from the storing unit 14 and executing to make the hardware and the program 14P work in cooperation and realize various kinds of processing units. Major processing units realized by the processor 15 are an input storing unit 15A, an individual data VaR amount calculating unit 15B, a cumulating unit 15C, and an outputting unit 15D.

The input storing unit 15A has a function of inputting the loss data 14A and the coefficient table 14B from the communication I/F unit 11 or the operation inputting unit 12 and storing into the storing unit 14.

The individual data VaR amount calculating unit 15B has a function of loading the loss data 14A and the coefficient table 14B from the storing unit 14 and, for each loss data 14Ai, calculating the value of multiplication of a coefficient held in the coefficient table 14B in association with loss occurrence frequency λi included in the loss data and a loss amount bi included in the loss data, and storing as an individual data VaR amount 14Ci into the storing unit 14.

The cumulating unit 15C has a function of loading all the individual data VaR amounts 14Ci from the storing unit 14, calculating the sum thereof, and storing the calculation result as a cumulative value 14Cm into the storing unit 14.

The outputting unit 15D has a function of loading the cumulative value 14Cm from the storing unit 14, and outputting as an approximate value of a risk amount to the screen displaying unit 13, or to the outside via the communication I/F unit 11.

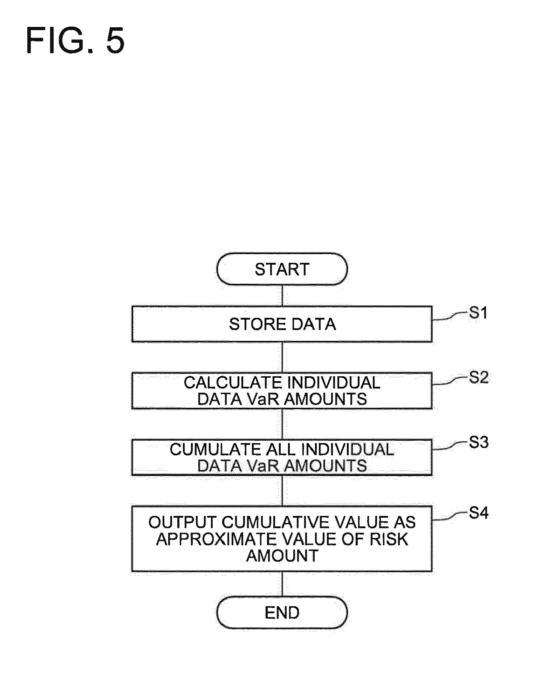

Next, with reference to Fig. 5, the operation of the risk management device 1 according to this exemplary embodiment will be described.

First, the input storing unit 15A inputs the loss data 14A and the coefficient table 14B from the communication I/F unit 11 or the operation inputting unit 12 and stores into the storing unit 14 (step S1).

Next, the individual data VaR amount calculating unit 15B, for each loss data included in the loss data 14A, multiplies a coefficient held in the coefficient table 14B in association with loss occurrence frequency included in the loss data and a loss amount included in the loss data, and stores the calculation result as an individual data VaR amount corresponding to the loss data into the storing unit 14 (step S2).

Next, the cumulating unit 15D stores a value obtained by adding all the individual data VaR amounts 14Ci as the cumulative value 14Cm into the storing unit 14 (step S3).

Next, the outputting unit 15D outputs the cumulative value 14Cm as an approximate value of a risk amount to the screen displaying unit 13, or to the outside via the communication I/F unit 11 (step S4).

Next, it will be described why a VaR calculated in this exemplary embodiment is an approximate value of a VaR weighed by a risk weighing device as the target of approximation based on the loss data 14A.

First, data inputted into a risk weighing device is the set of information each including a ternary of the content of a risk loss event, the amount of loss, and the mean value of the frequency that the amount of loss occurs from the content during a holding period: for example, (Tokai earthquake 1, 1 million yen, 0.03), (Tokai earthquake 2, 10 million yen, 0.06), (bank transfer scam, 0.5 million yen, 0.65). Although information like a mean event interval (a holding period / the mean value of frequency) may be included instead of the mean value of frequency, it is assumed herein that the abovementioned ternary is included because the following discussion will be established as it is. Moreover, although an event content of Tokai earthquake is separated into "Tokai earthquake 1" and "Tokai earthquake 2" based on a difference of loss amounts for the sake of convenience of the following description, the following discussion will be established as it is without this separation for the sake of convenience. For the sake of ease of description, a "risk loss event" will be written as a "loss event" hereinafter. Input data regarding an event content i will be written as (I,Si,Fi). Si denotes a loss amount, and Fi denotes the mean value of frequency.

The risk weighing device estimates a probability distribution of loss occurrences due to risk during a holding period so that it fits to input data as much as possible based on some assumptions, calculates a VaR or the like as a feature amount from a probability distribution of total loss amounts during a holding period specifically, and outputs. That is to say, denoting a loss amount during a holding period due to a loss event content i by Li, and denoting a total loss amount by L, an econometric model estimates a joint distribution P(L1, ..., Ln) of L1, ..., Ln, calculates a probability distribution P(L) of the total loss amount L=L1+,,,+Ln based thereon, and outputs a VaR[L] or the like as a feature amount thereof. Herein, the kinds of loss events are expressed as 1, ..., n (i.e., n kinds in total). The above description is about the principle of a risk weighing device and, in actual implementation, it is designed to obtain the same result while saving a calculation amount and a storage amount by configuring P(L1, ..., Ln) and P(L) as implicitly as possible.

A difference of risk weighing devices depends on what assumptions they estimate based on or from what viewpoints they make fit to input data. It is possible to set any odd assumptions or viewpoints for fitting, but, when a frequency distribution and a scale distribution are estimated by a widely used method such as the method of moments, maximum likelihood estimation and the Bayesian method, a mean value E[Li] of loss mounts during a holding period with respect to a loss event content i becomes close to a mean value Si×Fi obtained directly from the loss amount and mean frequency of input data (specifically, in the case of the method of moments, they coincide). Hereinafter, a risk weighing device as the target of approximation shall have this feature. In this case, due to the additivity of mean values, a mean value E[L] of total loss amounts L also becomes a value close to a mean value S1×F1+, ..., +Sn×Fn obtained directly from the loss amounts and mean frequency of input data. To be specific, a ratio E[Li]/E[L] of the mean value of a loss amount resulting from a specific event to the mean value of total loss amounts also becomes close to a ratio Si×Fi/(S1×F1, ..., +Sn×Fn) obtained directly from input data. Besides, a ratio E[Li1+, ..., +Lim]/E[L] of the mean value of a loss amount resulting from a specific event set I={i1, ..., im} to the mean value of total loss amounts also becomes close to a ratio (Si1×Fi1+, ..., +Sim×Fim)/(S1×F1+, ..., +Sn×Fn) obtained directly from input data. Averagely, in a risk weighing device as the target of approximation, the ratio of a loss amount resulting from a specific event set to a total loss amount becomes close to that obtained directly from input data.

A method for calculating a VaR according to this exemplary embodiment will be described from the above viewpoint. By the method for calculating a VaR according to this exemplary embodiment, the same value is calculated as that obtained by:
assuming that:
   - the number of occurrences during a holding period of each loss event follows a frequency distribution of a kind used in a general risk weighing device;
   - the correlation of the abovementioned number of occurrences between loss events is 1 (precisely, a copula of a joint distribution thereof is a uniform distribution on the diagonal); and
   - a loss amount caused by one loss in each loss event becomes Si written in input data,
fitting P(L1, ..., Ln) so that a mean value E[Li] of loss amounts during a holding period with respect to a loss event content i becomes equal to a mean value Si×Fi obtained directly from the loss amount and mean frequency of input data, calculating P(L) by using it, and outputting VaR[L].

At this moment, due to the additivity of mean values, a mean value E[L] of total loss amounts L by the method for calculating a VaR according to this exemplary embodiment becomes equal to a mean value S1×F1,+ ..., +Sn×Fn obtained directly from the loss amount and mean frequency of input data. To be specific, a ratio E[Li]/E[L] of the mean value of a loss amount resulting from a specific event to the mean value of total loss amounts is also equal to a ratio Si×Fi/(S1×F1, ..., +Sn×Fn) obtained directly from input data. Besides, a ratio E[Li1+, ..., +Lim]/E[L] of the mean value of a loss amount resulting from a specific event set I={i1, ..., im} to the mean value of total loss amounts is also equal to a ratio (Si1×Fi1+, ..., +Sim×Fim)/(S1×F1+, ..., +Sn×Fn) obtained directly from input data. Averagely, in the method for calculating a VaR according to this exemplary embodiment, the ratio of a loss amount resulting from a specific event set to a total loss amount becomes equal to a ratio obtained directly from input data.

Owing to the abovementioned feature, namely, a feature such that, values obtained directly from input data are close to the value of E[L], close to the value of the ratio E[Li]/E[L] of the mean value of a loss amount corresponding to specific input data to the mean value of total loss amounts, and close to the value of the ratio E[Li1+,,, +Lim]/E[L] of the mean value of a loss amount corresponding to a specific input data group to the mean value of total loss amounts, the method for calculating a VaR according to this exemplary embodiment is approximate to that of a risk weighing device as the target of approximation.

Further, in the VaR calculation method according to this exemplary embodiment, a cumulative distribution function of a Poisson distribution is smoothed and then a coefficient equal to the value of the number of occurrences at a lower α% point is obtained, but this is merely smooth fitting of the above joint distribution P(L1, ..., Ln) that is a discrete step function, and hence, the values of E[L], E[Li]/[L] and E[Li1+, ..., +Lim]/E[L] do not vary largely. Consequently, owing to the feature that the mean ratio of a loss amount of a specific input data group to a mean total loss amount is close, the individual data VaR amount in this exemplary embodiment is approximate to that of a risk weighing device as the target of approximation.

Thus, according to this exemplary embodiment, it is possible to rapidly calculate an approximate value of a VaR.

### [Second Exemplary Embodiment]

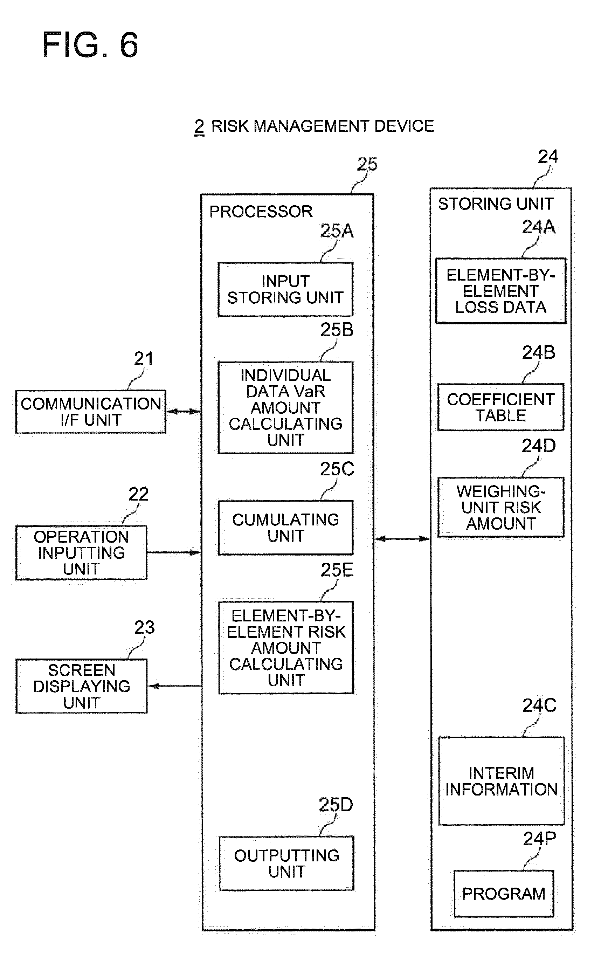

With reference to Fig. 6, a risk management device 2 according to a second exemplary embodiment of the present invention has a function of calculating, from a VaR of each weighing unit weighed by a risk weighing device, a risk amount for each element forming the weighing unit, by utilizing the function of approximating a VaR based on loss data.

The risk management device 2 has a communication I/F unit 21, an operation inputting unit 22, a screen displaying unit 23, a storing unit 24, and a processor 25, as major function units.

The communication I/F unit 21, the operation inputting unit 22 and the screen displaying unit 23 have the same functions as the communication I/F unit 11, the operation inputting unit 12 and the screen displaying unit 13 shown in Fig. 1 in the first exemplary embodiment.

The storing unit 24 is formed by a storage device such as a hard disk and a semiconductor memory, and has a function of storing processing information necessary for various kinds of processing by the processor 25 and a program 24P. The program 24P, which is a program loaded into the processor 25 and executed to realize various kinds of processing units, is previously loaded from an external device (not shown) or a computer-readable storage medium (not shown) via a data input/output function such as the communication I/F unit 21, and is stored into the storing unit 24. Major processing information stored by the storing unit 24 includes element-by-element loss data 24A, a coefficient table 24B, interim information 24C, and a weighing-unit risk amount 24D.

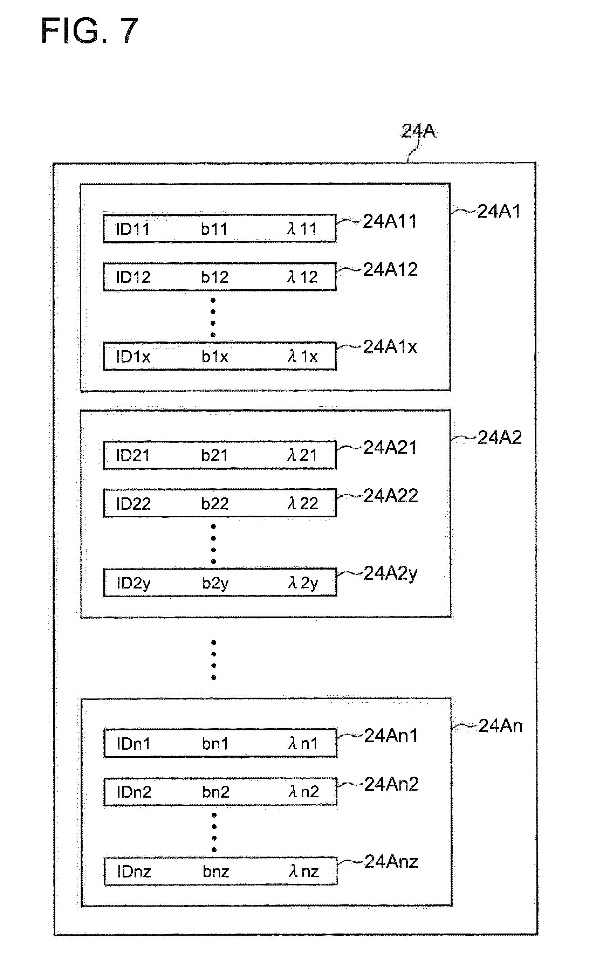

The element-by-element loss data 24A is loss data for each element forming a weighing unit that is a unit for weighing a risk amount by a risk weighing device. For example, in a case that a risk weighing device using loss distribution approach predicts, for each unit called an operation cell in which a plurality of operational divisions are gathered, a frequency distribution and a scale distribution from input data relating to each operation cell, and predicts the distribution of total loss amounts of each operation cell, an operation cell is one weighing unit, and individual operational divisions configuring an operation cell are elements. Fig. 7 shows an example of the configuration of the element-by-element loss data 24A. The element-by-element loss data 24A of this example is divided for n elements in total from 1^{st} to n^{th}. Individual element-by-element loss data 24Ai are composed of x loss data, y loss data, ..., and z loss data, respectively. As well as the loss data 14A1 and the like described in the first exemplary embodiment, each of loss data 24A11, 24A12, ..., 24A1x, 24A21, 24A22, ..., 24A2y, ..., 24An1, 24An2, ..., 24Anz has an identifier (an ID) for uniquely identifying the loss data, a loss amount b and loss occurrence frequency λ.

The coefficient table 24B is the same as the coefficient table 14B in the first exemplary embodiment.

The weighing-unit risk amount 24D is a risk amount of a weighing unit weighed by a risk weighing device. For example, in a case that a risk weighing device calculates a 99.9% VaR amount in the distribution of total loss amounts for each unit called an operation cell, the weighing-unit risk amount 24D represents a 99.9% VaR amount calculated for each operation cell.

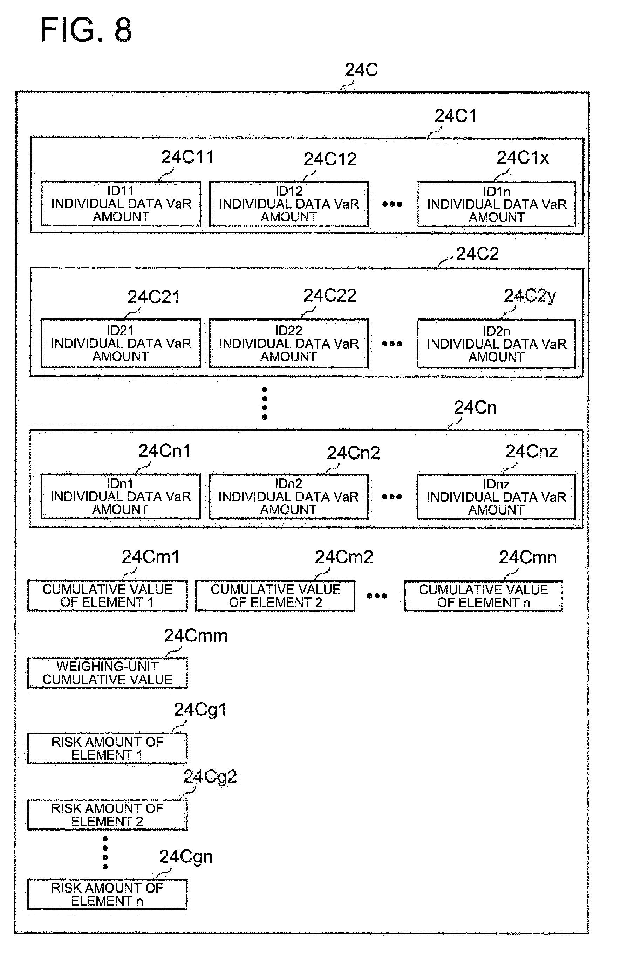

The interim information 24C is interim data or final data generated in the process of operation by the processor 25. Fig. 8 shows an example of the configuration of the interim information 24C. The interim information 24C of this example has: an individual data VaR amount 24C1 of element 1, composed of individual data VaR amounts 24C11, 24C 12, ..., 24C1x corresponding one-to-one to the loss data 24A11, 24A12, ..., 24A1x in loss data 24A1 of the element 2; an individual data VaR amount 24C2 of an element 2, composed of individual data VaR amounts 24C21, 24C22, ..., 24C2y corresponding one-to-one to the loss data 24A21, 24A22, ..., 24A2y in loss data 24A2 of the element 2; ...; and an individual data VaR amount 24Cn of an element n, composed of individual data VaR amounts 24Cn1, 24Cn2, ..., 24Cnz corresponding one-to-one to the loss data 24An1, 24An2, ..., 24Anz in loss data 24An of the element n. Moreover, the interim information 24C has cumulative values 24Cm1, 24Cm2, ..., 24Cmn each of which is the sum of individual data VaR amounts of each of the elements, and a weighing-unit cumulative value 24Cmm that is the sum of the cumulative values 24Cm1, 24Cm2, ..., 24Cmn. Furthermore, the interim information 24C has risk amounts 24Cg1, 24Cg2, ..., 24Cgn of each of the elements.

The processor 25 has a microprocessor such as a CPU and a peripheral circuit thereof, and has a function of loading the program 24P from the storing unit 24 and executing to make the hardware and the program 24P work in cooperation and realize various kinds of processing units. Major processing units realized by the processor 25 are an input storing unit 25A, an individual data VaR amount calculating unit 25B, a cumulating unit 25C, an outputting unit 25D, and an element-by-element risk amount calculating unit 25E.

The input storing unit 25A has a function of inputting the element-by-element loss data 24A, the coefficient table 24B and the weighing-unit risk amount 24D from the communication I/F unit 21 or the operation inputting unit 22 and storing into the storing unit 24.

The individual data VaR amount calculating unit 25B has a function of loading the element-by-element loss data 24A and the coefficient table 24B from the storing unit 24 and, for each element and each loss data, calculating the value of multiplication of a coefficient held in the coefficient table 24B in association with loss occurrence frequency λi included in the loss data and a loss amount bi included in the loss data, and storing as an individual data VaR amount into the storing unit 24.

The cumulating unit 25C has a function of, for each element, loading all the individual data VaR amounts from the storing unit 24, calculating the sum thereof, and storing the calculation result as a cumulative value 24Cm1, 24Cm2, ..., 24Cmn into the storing unit 24. Moreover, the cumulating unit 25C has a function of calculating the sum of the cumulative values 24Cm1, 24Cm2, ..., 24Cmn of the respective elements, and storing the calculation result as the weighing-unit cumulative value 24Cmm into the storing unit 24.

The element-by-element risk amount calculating unit 25E has a function of: loading the weighing-unit risk amount 24D, the cumulative values 24Cm1, 24Cm2, ..., 24Cmn of the individual data VaR amounts of the respective elements, and the cumulative value 24Cmm of the individual data VaR amounts of the weighing unit from the storing unit 24; calculating, for each element, a risk amount equivalent to the ratio of a cumulative value Cmi of individual data VaR amounts of the element to the cumulative value 24Cmm of the individual data VaR amounts of the weighing unit; and storing as element-by-element risk amounts 24Cg1, 24Cg2, ..., 24Cgn into the storing unit 24.

The outputting unit 25D has a function of loading the element-by-element risk amounts 24Cg1, 24Cg2, ..., 24Cgn from the storing unit 24, and outputting to the screen displaying unit 23, or to the outside via the communication I/F unit 21.

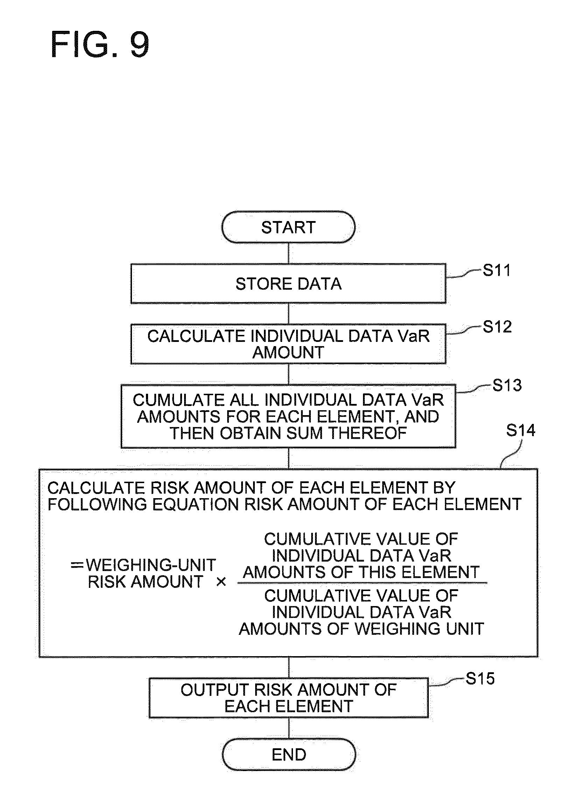

Next, with reference to Fig. 9, the operation of the risk management device 2 according to this exemplary embodiment will be described.

First, the input storing unit 25A inputs the element-by-element loss data 24A, the coefficient table 24B and the weighing-unit risk amount 24D from the communication I/F unit 21 or the operation inputting unit 22 and stores into the storing unit 24 (step S11).

Next, the individual data VaR amount calculating unit 25B, for each element and each loss data, calculates the value of multiplication of a coefficient held in the coefficient table 24B in association with loss occurrence frequency λi included in the loss data and a loss amount bi included in the loss data, and stores as an individual data VaR amount into the storing unit 24 (step S12).

Next, the cumulating unit 25C cumulates all individual data VaR amounts for each element, calculates the sum thereof, and stores the calculation result as the cumulative value 24Cm1 of the element 1, the cumulative value 24Cm2 of the element 2, ..., the cumulative value 24Cmn of the element n, and the weighing-unit cumulative value 24Cmm, into the storing unit 24 (step S13).

Next, the element-by-element risk amount calculating unit 25E calculates, for each element, a risk amount equivalent to the ratio of a cumulative value 24Cmi of individual data VaR amounts of the element to the cumulative value 24Cmm of the individual data VaR amounts of the weighing unit, in the weighing-unit risk amount 24D, and stores as the element-by-element risk amounts 24Cg1, 24Cg2, ..., 24Cgn into the storing unit 24 (step S14).

Finally, the outputting unit 25D outputs the element-by-element risk amounts 24Cg1, 24Cg2, ..., 24Cgn to the screen displaying unit 23, or to the outside via the communication I/F unit 21 (step S15).

Thus, according to this exemplary embodiment, it is possible to calculate, from a risk amount of each weighing unit weighed by a risk weighing device, a risk amount of each of elements configuring the weighing unit. Consequently, it is possible to easily execute component analysis, which is analysis of the degree of a risk amount of each of operational divisions configuring one operational cell. This is because, by obtaining the ratio of each element to the whole, which is necessary to obtain a risk amount of each element from a risk amount of the whole weighing unit, by approximation, it is possible to make the calculation amount much less than in the case of obtaining the ratio by using a risk weighing device.

### [Third Exemplary Embodiment]

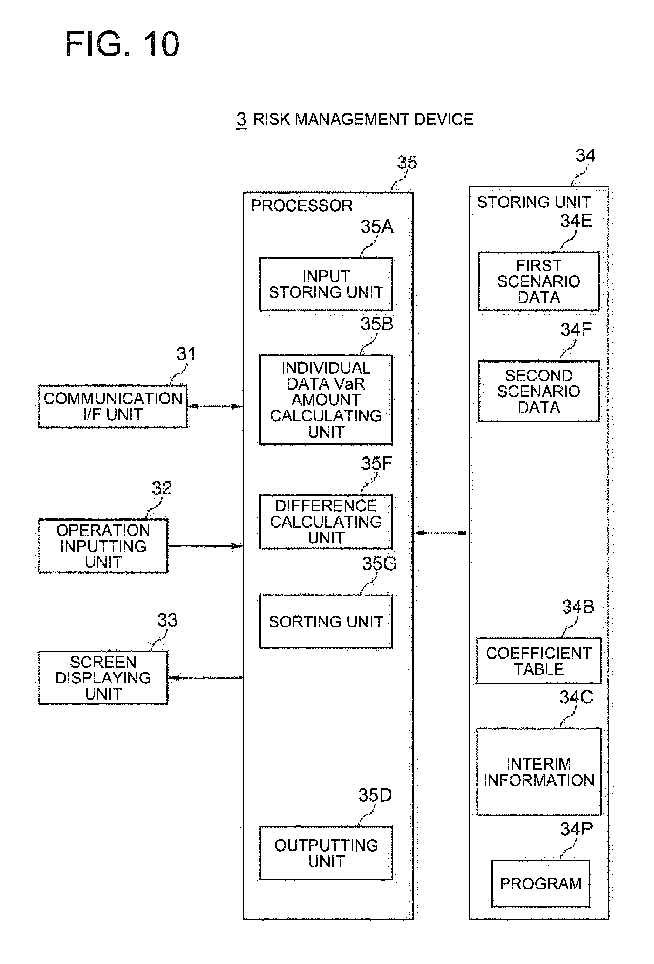

With reference to Fig. 10, a risk management device 3 according to a third exemplary embodiment of the present invention has a function of determining scenario data with a high expectation of effects of risk reduction measures by utilizing the function of approximating a VaR based on loss data.

The risk management device 3 has a communication I/F unit 31, an operation inputting unit 32, a screen displaying unit 33, a storing unit 34, and a processor 35, as major function units.

The communication I/F unit 31, the operation inputting unit 32 and the screen displaying unit 33 have the same functions as the communication I/F unit 11, the operation inputting unit 12 and the screen displaying unit 13 shown in Fig. 1 in the first exemplary embodiment.

The storing unit 34 is formed by a storage device such as a hard disk and a semiconductor memory, and has a function of storing processing information necessary for various kinds of processing by the processor 35 and a program 34P. The program 34P, which is a program loaded into the processor 35 and executed to realize various kinds of processing units, is previously loaded from an external device (not shown) or a computer-readable storage medium (not shown) via a data input/output function such as the communication I/F unit 31, and is stored into the storing unit 34. Major processing information stored by the storing unit 34 includes first scenario data 34E, second scenario data 34F, a coefficient table 34B, and interim information 34C.

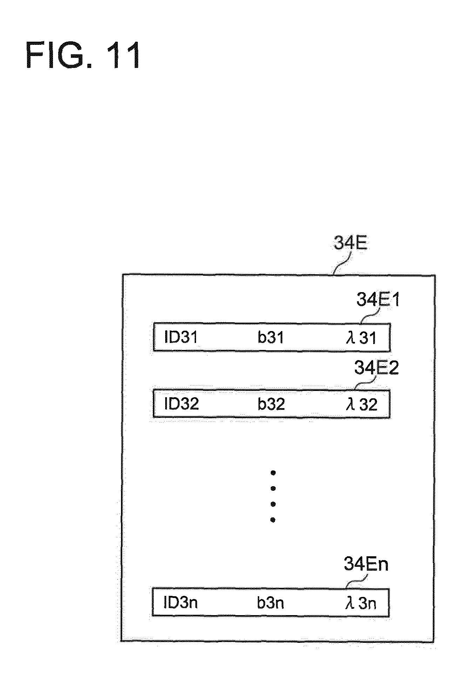

The first scenario data 34E is composed of one or more scenario data that is the target of examination of the expectation level of effects of risk reduction measures. Fig. 11 shows an example of the configuration of the first scenario data 34E. The first scenario data 34E of this example is composed of n scenario data 34E1 to 34En. Each scenario data 34Ei has an identifier (an ID) for uniquely identifying the scenario data, a loss amount b, and loss occurrence frequency λ. The loss amount and the loss occurrence frequency are values predicted with current risk reduction measures. That is to say, the loss amount and loss occurrence frequency in scenario data are predicted based on the results of risk assessment and internal control situation assessment executed on each scenario. The loss amount and loss occurrence frequency in the first scenario data are values predicted in consideration of current risk reduction measures.

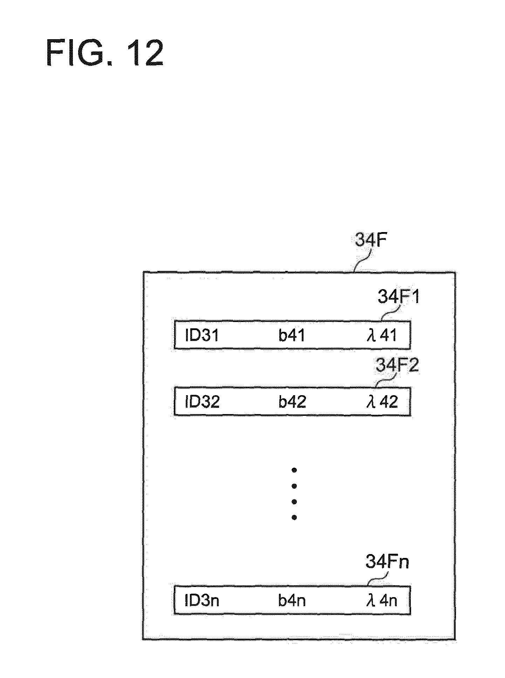

The second scenario data 34F is composed of one or more scenario data corresponding one-to-one to the scenario data in the first scenario data 34E. Fig. 12 shows an example of the configuration of the second scenario data 34F. The second scenario data 34F of this example is composed of n scenario data 34F1 to 34Fn corresponding one-to-one to the first scenario data 34E1 to 34En. Each scenario data 34Fi has the identifier (the ID), loss amount b and loss occurrence frequency λ of first scenario data corresponding thereto. The loss amount and loss occurrence frequency in the scenario data 34Fi shall be values predicted assuming that risk assessment and internal control situation assessment on the scenario achieve almost full score. Therefore, the lower the current assessment result of a scenario is, the smaller the loss amount and loss occurrence frequency in the second scenario data are likely to be than the loss amount and loss occurrence frequency in the corresponding first scenario data in general. This is because it can be thought that, as risk reduction measures are strengthened, the frequency of occurrence of loss is less and the amount of one loss is smaller in general.

The coefficient table 34B is the same as the coefficient table 14B in the first exemplary embodiment.

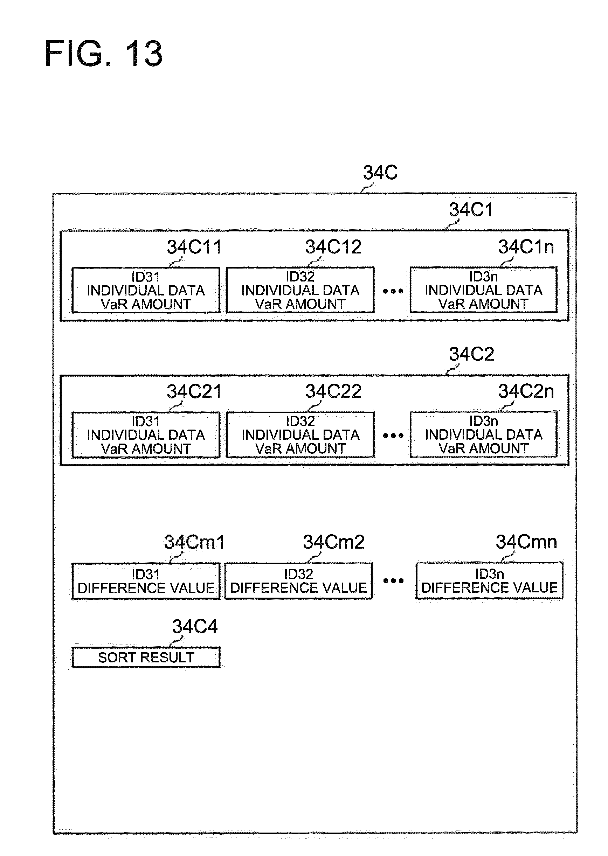

The interim information 34C is interim data or final data generated in the process of operation by the processor 35. Fig. 13 shows an example of the configuration of the interim information 34C. The interim information 34C of this example has: a first-scenario-data individual data VaR amount 34C1 composed of first individual VaR amounts 34C11 to 34C1n corresponding one-to-one to the first scenario data 34E1 to 34En; a second-scenario-data individual data VaR amount 34C2 composed of second individual VaR amounts 34C21 to 34C2n corresponding one-to-one to the second scenario data 34F1 to 34Fn; difference values 34C31 to 34C3n each of which is a difference value between the first individual data VaR amount and the corresponding second individual data VaR amount; and a sort result 34C4 of the difference values 34C31 to 34C3n. The first and second individual data VaR amounts and the difference values are each provided with the identifier (ID) of the corresponding first scenario data.

The processor 35 has a microprocessor such as a CPU and a peripheral circuit thereof, and has a function of loading the program 34P from the storing unit 34 and executing to make the hardware and the program 34P work in cooperation and realize various kinds of processing units. Major processing units realized by the processor 35 are an input storing unit 35A, an individual data VaR amount calculating unit 35B, an outputting unit 35D, a difference calculating unit 35F, and a sorting unit 35G.

The input storing unit 35A has a function of inputting the first scenario data 34E, the second scenario data 34F and the coefficient table 34B from the communication I/F unit 31 or the operation inputting unit 32 and storing into the storing unit 34.

The individual data VaR amount calculating unit 35B has a function of loading the first scenario data 34E, the second scenario data 34F and the coefficient table 34B from the storing unit 34, calculating, for each of the first scenario data, the value of multiplication of a coefficient held in the coefficient table 34B in association with loss occurrence frequency λi included in the scenario data and a loss amount bi included in the scenario data, and storing as the first individual data VaR amounts 34C11 to 34C1n into the storing unit 34. Moreover, the individual data VaR amount calculating unit 35B has a function of calculating, for each of the second scenario data, the value of multiplication of a coefficient held in the coefficient table 34B in association with loss occurrence frequency λi included in the scenario data and a loss amount bi included in the scenario data, and storing as the second individual data VaR amounts 34C21 to 34C2n into the storing unit 34.

The difference calculating unit 35F has a function of loading the first individual data VaR amounts 34C11 to 34C1n and the second individual data VaR amounts 34C21 to 34C2n from the storing unit 34, calculating, for each combination of the corresponding first and second individual data VaR amounts, an amount obtained by subtracting the second individual data VaR amount from the first individual data VaR amount, and storing as the difference values 34C1 to 34Cn into the storing unit 34.

The sorting unit 35G has a function of loading the difference values 34C1 to 34Cn from the storing unit 34, sorting in decreasing order of values, and storing the sort result 34C4 into the storing unit 34.

The outputting unit 35D has a function of: loading the sort result 34C4 from the storing unit 34; and outputting the identifiers of the first scenario data added to difference values of the top m values (m denotes a predetermined integer) or difference values of a predetermined value or more and the difference values, as the identifiers of scenario data with high expectation level of effects of risk reduction measures and reducible amounts, to the screen displaying unit 33 or to the outside via the communication I/F unit 31.

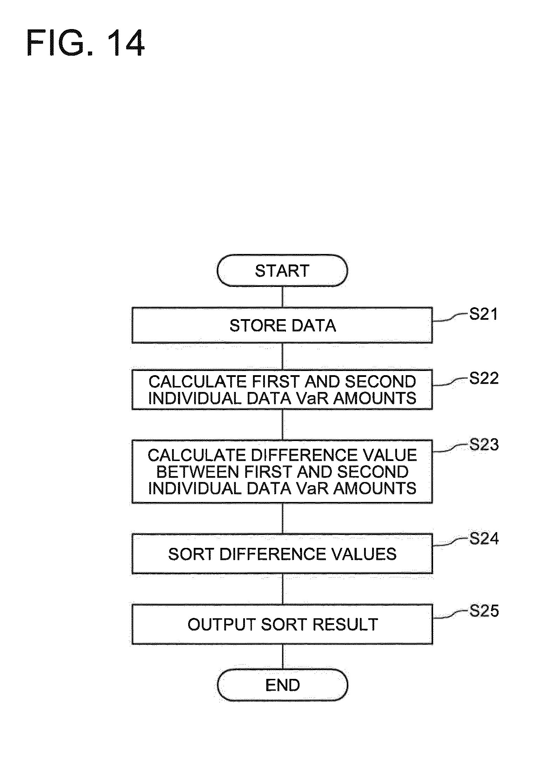

Next, with reference to Fig. 14, the operation of the risk management device 3 according to this exemplary embodiment will be described.

First, the input storing unit 35A inputs the first scenario data 34E, the second scenario data 34F and the coefficient table 34B from the communication I/F unit 31 or the operation inputting unit 32 and storing into the storing unit 34 (step S21).

Next, the individual data VaR amount calculating unit 35B calculates, for each of scenario data included in the first scenario data 34Ei and the second scenario data 34Fi, a coefficient held in the coefficient table 34B in association with loss occurrence frequency λi included in the scenario data and a loss amount bi included in the scenario data, and stores as a first individual data VaR amount 34C1i and a second individual data VaR amount 34C2i into the storing unit 34 (step S22).

Next, the difference calculating unit 35F calculates, for each combination of the corresponding first and second individual data VaR amounts, a value obtained by subtracting the second individual data VaR amount 34C2i from the first individual data VaR amount 34C1i, and stores as a difference value 34Cmi into the storing unit 34 (step S23).

Next, the sorting unit 35G sorts the difference values 34Cm1 to 34Cmn in decreasing order of values, and stores the sort result 34C4 into the storing unit 34 (step S24)

Finally, the outputting unit 35C outputs the identifiers of the first scenario data added to difference values of the top m values (m denotes a predetermined integer) or difference values of a predetermined amount or more in the sort result 34C4 and the difference values, as the identifiers of scenario data with high expectation level of effects of risk reduction measures and reducible amounts, to the screen displaying unit 33 or to the outside via the communication I/F unit 31 (step S25).

Thus, according to this exemplary embodiment, when at least one of the loss amount and the loss occurrence frequency in scenario data is improved due to effects of risk reduction measures, it is possible by examining the degree of a VaR amount to be reduced on the scenario-data basis to easily execute a kind of component analysis, which is analysis of what scenario is a scenario with high expectation level of effects of risk reduction measures. This is because it is possible to obtain how a VaR amount changes when at least one of the loss amount and the loss occurrence frequency of scenario data changes by approximation, and therefore, it is possible to make the calculation amount much less than in the case of obtaining the same by using a risk weighing device.

### [Fourth Exemplary Embodiment]

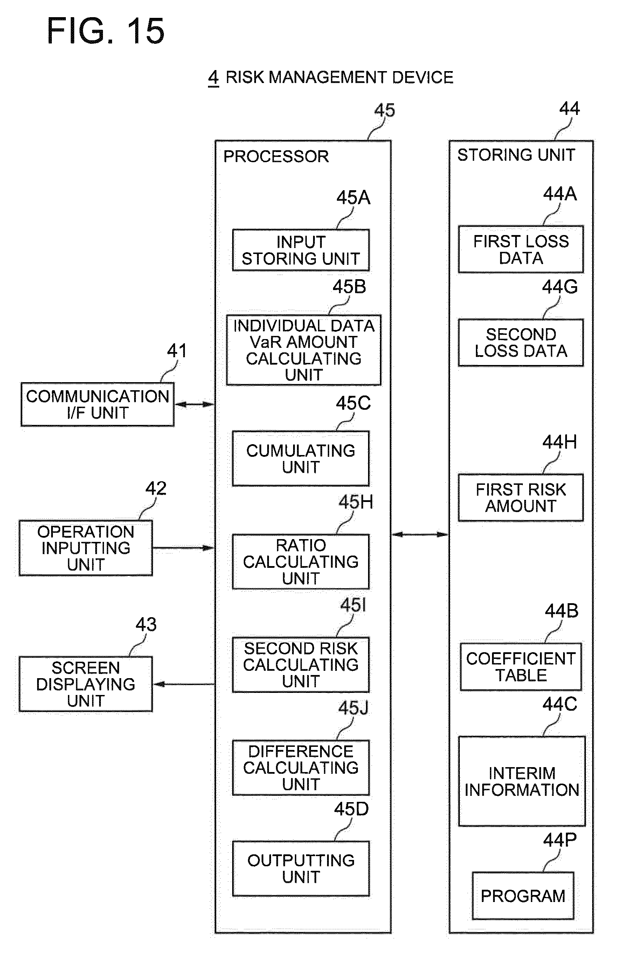

With reference to Fig. 15, a risk management device 4 according to a fourth exemplary embodiment of the present invention has a function of calculating a change amount of a VaR amount resulting from change of loss data by utilizing the function of approximating a VaR based on loss data.

The risk management device 4 has a communication I/F unit 41, an operation inputting unit 42, a screen displaying unit 43, a storing unit 44, and a processor 45, as major function units.

The communication I/F unit 41, the operation inputting unit 42 and the screen displaying unit 43 have the same functions as the communication I/F unit 11, the operation inputting unit 12 and the screen displaying unit 13 shown in Fig. 1 in the first exemplary embodiment.

The storing unit 44 is formed by a storage device such as a hard disk and a semiconductor memory, and has a function of storing processing information necessary for various kinds of processing by the processor 45 and a program 44P. The program 44P, which is a program loaded into the processor 45 and executed to realize various kinds of processing units, is previously loaded from an external device (not shown) or a computer-readable storage medium (not shown) via a data input/output function such as the communication I/F unit 41, and is stored into the storing unit 44. Major processing information stored by the storing unit 44 includes first loss data 44A, second loss data 44G, a first risk amount 44H, a coefficient table 44B, and interim information 44C.

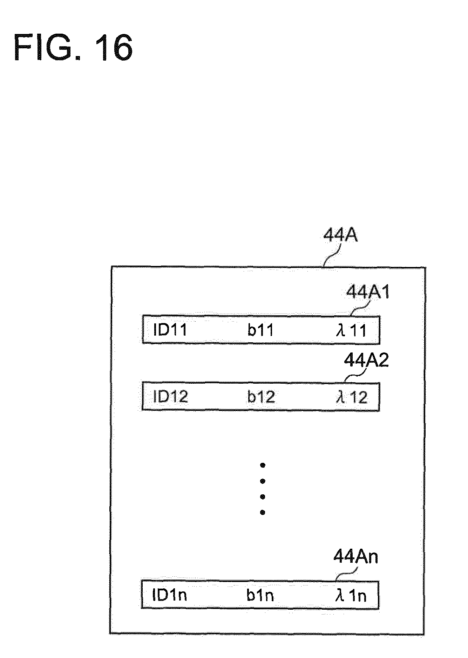

As well as the loss data 14A shown in Fig. 1 in the first exemplary embodiment, the first loss data 44A is data including a loss amount and loss occurrence frequency. Fig. 16 shows example of the configuration of the loss data 44A. The loss data 44A of this example is composed of n loss data 44A1 to 44An in total. Each of the loss data has an identifier (an ID) for uniquely identifying loss data, a loss amount b, and loss occurrence frequency λ.

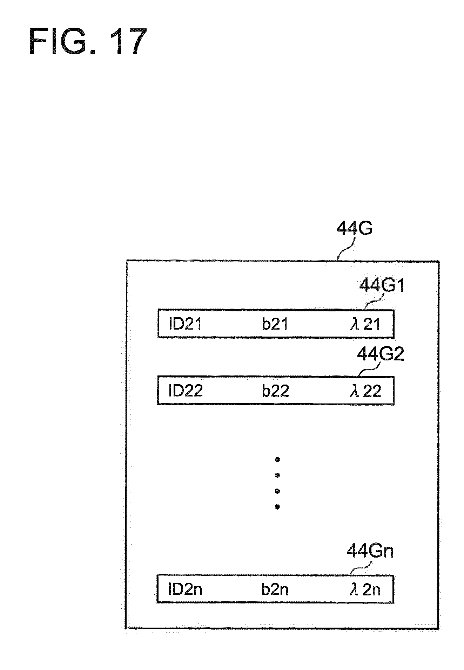

As well as the first loss data 44A, the second loss data 44G is data including a loss amount and loss occurrence frequency. Fig. 17 shows an example of the configuration of the loss data 44G. As well as the first loss data 44A, the loss data 44G of this example is composed of n loss data 44G1 to 44Gn in total, but it is not required that the numbers of data are the same. Each of the loss data has an identifier (an ID) for uniquely identifying loss data, a loss amount b, and loss occurrence frequency λ.

The first loss data 44A and the second loss data 44G may have any relation. For example, the second loss data 44G may have loss data corresponding one-to-one to the first loss data 44A and at least either the loss amounts or the loss occurrence frequencies of some of the loss data may have different values from the loss amounts or the loss occurrence frequencies of the corresponding second loss data. As such a case, it is possible to think of a case that the loss amounts and loss occurrence frequencies of some of the loss data become less than those in the previous period owing to strengthening of risk reduction measures. Moreover, as another case, it is possible to think of a case that the loss amounts and loss occurrence frequencies of some of the loss data change from those in the previous period due to change of volatility of stock prices or change of operational environments such as change of operation amounts.

The first risk amount 44H is a risk amount, for example, a 99.9% VaR amount, weighed by a risk weighing device as the target of approximation.

The coefficient table 44B is the same as the coefficient table 14B in the first exemplary embodiment.

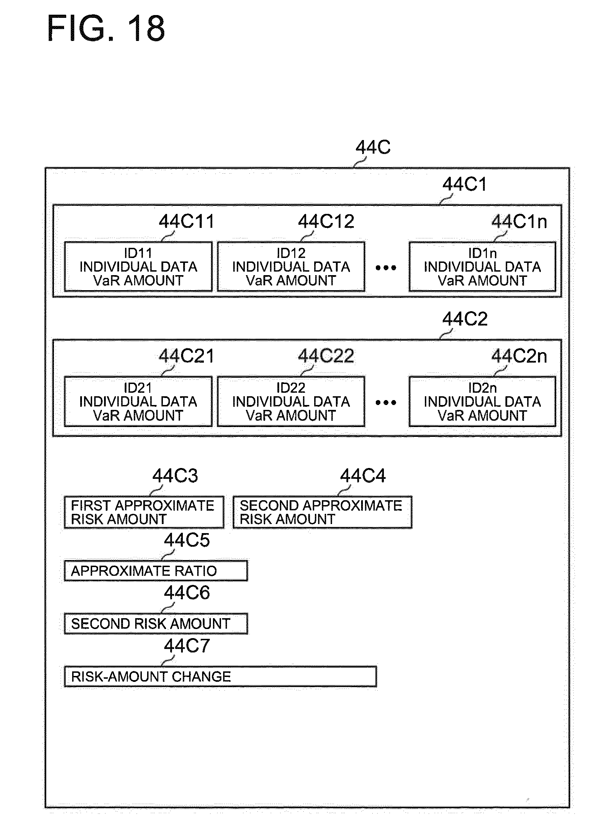

The interim information 44C is interim data or final data generated in the process of operation by the processor 45. Fig. 18 shows an example of the configuration of the interim information 44C. The interim information 44C of this example has: a first-loss-data individual data VaR amount 44C1 composed of first individual data VaR amounts 44C11 to 44C1n corresponding one-to-one to the first loss data 44A1 to 44An; a second-loss-data individual VaR amount 44C2 composed of second individual data VaR amounts 44C21 to 44C2n corresponding one-to-one to the second loss data 44G1 to 44Gn; a first approximate risk amount 44C3 that is the sum of the first individual data VaR amounts 44C11 to 44C1n; a second approximate risk mount 44C4 that is the sum of the second individual data VaR amounts 44C21 to 44C2n; an approximate ratio 44C5 that is the ratio of the first risk amount 44H to the first approximate risk amount 44C3; a second risk amount 44C6 that is a value obtained by multiplying the second approximate risk amount 44C by the approximate ratio 44C; and a risk-amount change 44C7 that is the difference between the first risk amount 44H and the second risk amount 44C6.

The processor 45 has a microprocessor such as a CPU and a peripheral circuit thereof, and has a function of loading the program 44P from the storing unit 44 and executing to make the hardware and the program 44P work in cooperation and realize various kinds of processing units. Major processing units realized by the processor 45 are an input storing unit 45A, an individual data VaR amount calculating unit 45B, a cumulating unit 45C, a ratio calculating unit 45H, a second risk amount calculating unit 45I, a difference calculating unit 45J, and an outputting unit 45D.

The input storing unit 45A has a function of inputting the first loss data 44A, the second loss data 44G, the first risk amount 44H and the coefficient table 44B from the communication I/F unit 41 or the operation inputting unit 42 and storing into the storing unit 44.

The individual data VaR amount calculating unit 45B has a function of: loading the first loss data 44A, the second loss data 44G and the coefficient table 44B from the storing unit 44; calculating, for each loss data 44Ai included in the first loss data 44A, the value of multiplication of a coefficient held in the coefficient table 44B in association with loss occurrence frequency λi included in the loss data and a loss amount bi included in the loss data; and storing as the first individual data VaR amounts 44C11 to 44C1n into the storing unit 44. Moreover, the individual data VaR amount calculating unit 45B has a function of: calculating, for each loss data included in the second loss data, the value of multiplication of a coefficient held in the coefficient table 44B in association with loss occurrence frequency λi included in the loss data and a loss amount bi included in the loss data; and storing as the second individual data VaR amounts 44C21 to 44C2n into the storing unit 44.

The cumulating unit 45C has a function of loading the first individual data VaR amounts 44C11 to 44C1n from the storing unit 44, and storing the first approximate risk amount 44C3 obtained by cumulating them into the storing unit 44. Moreover, the cumulating unit 45C has a function of loading the second individual data VaR amounts 44C21 to 44C2n from the storing unit 44, and storing the second approximate risk amount 44C4 obtained by cumulating them into the storing unit 44.

The ratio calculating unit 45H has a function of loading the first risk amount 44H and the first approximate risk amount 44C3 from the storing unit 44, and storing a value obtained by dividing the first risk amount 44H by the first approximate risk amount 44C3 as the approximate ratio 45C5 into the storing unit 44.

The second risk amount calculating unit 45I has a function of loading the second approximate risk amount 44C4 and the approximate ratio 44C5 from the storing unit 44, and storing a value obtained by multiplying the second approximate risk amount 44C4 by the approximate ratio 44C5 as the second risk amount 44C6 into the storing unit 44.

The difference calculating unit 45J has a function of loading the first risk amount 44H and the second risk amount 44C6 from the storing unit 44, and storing a value obtained by subtracting the first risk amount 44H from the second risk amount 44C6 as the risk-amount change 44C7 resulting from a difference between the first loss data 44A and the second loss data 44G into the storing unit 44.

The outputting unit 45D has a function of loading the risk-amount change 44C7 from the storing unit 44, and outputting as a risk-amount change resulting from a difference between the first loss data 44A and the second loss data 44G to the screen displaying unit 43, or to the outside via the communication I/F unit 41.

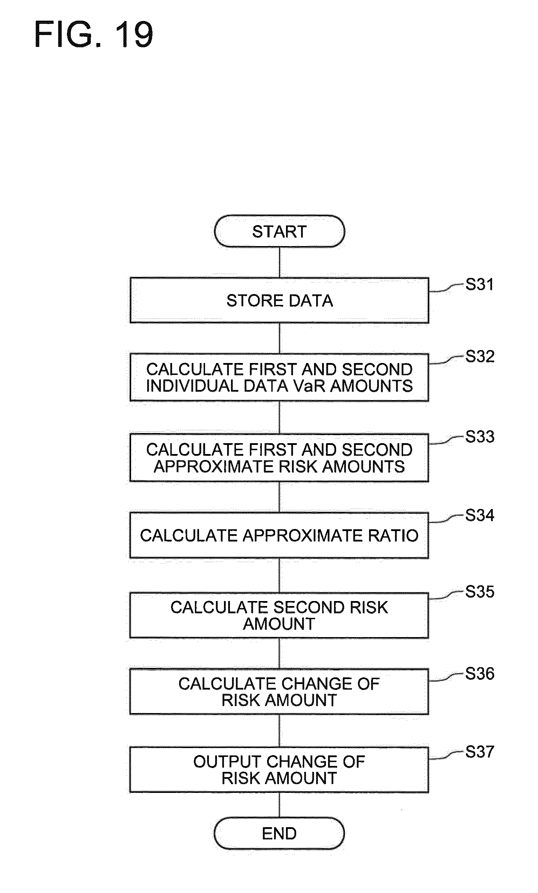

Next, with reference to Fig. 19, the operation of the risk management device 4 according to this exemplary embodiment will be described.

First, the input storing unit 45A inputs the first loss data 44A, the second loss data 44G, the first risk amount 44H and the coefficient table 44B from the communication I/F unit 41 or the operation inputting unit 42 and stores into the storing unit 44 (step S31).

Next, the individual data VaR amount calculating unit 45B multiplies, for each loss data included in the first loss data 44A and the second loss data 44G, a coefficient held in the coefficient table in association with loss occurrence frequency included in the loss data and a loss amount included in the loss data, and calculates the first individual VaR amounts 44C11 to 44C1n and the second individual data VaR amounts 44C21 to 44C2n (step S32).

Next, the cumulating unit 45C calculates the first approximate risk amount 44C3 that is the sum of the first individual data VaR amounts 44C11 to 44C1n, and the second approximate risk amount 44C4 that is the sum of the second individual data VaR amounts 44C21 to 44C2n (step S33).

Next, the ratio calculating unit 45H divides the first risk amount 44H by the first approximate risk amount 44C3 to calculate the approximate ratio 44C5 (step S34).

Next, the second risk amount calculating unit 45I multiplies the second approximate risk amount 44C4 and the approximate ratio 44C5 to calculate the second risk amount 44C6 (step S35).

Next, the difference calculating unit 45J subtracts the first risk amount 44H from the second risk amount 44C6 to calculate the risk-amount change 44C7 (step S36).

Finally, the outputting unit 45D outputs the risk-amount change 44C7 as a change in risk amount resulting from the difference between the first loss data 44A and the second loss data 44G to the screen displaying unit 43, or to the outside via the communication I/F unit 41 (step S37).

Thus, according to this exemplary embodiment, when loss data changes from the first loss data 44A to the second loss data 44G, it is possible to rapidly calculate the amount of change in VaR amount resulting from the change of the loss data. This is because it is possible to obtain a risk amount based on the second loss data by approximation and hence it is possible to make the calculation amount much less than in the case of obtaining the risk amount based on the second loss data by using a risk weighing device.

### [Fifth Exemplary Embodiment]

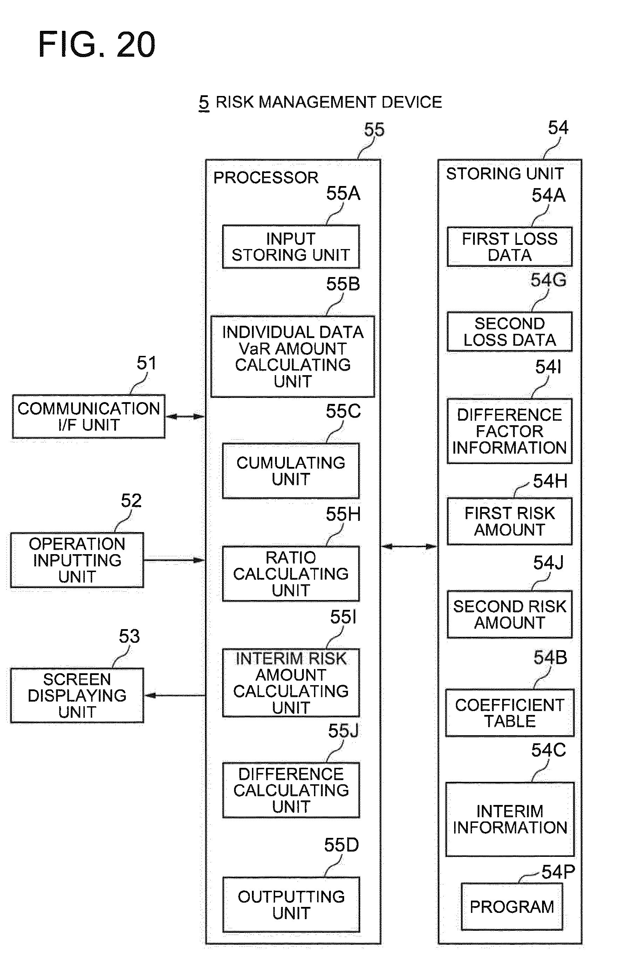

With reference to Fig. 20, a risk management device 5 according to a fifth exemplary embodiment of the present invention has a function of analyzing the factor of change of a VaR amount by utilizing the function of approximating a VaR based on loss data.

The risk management device 5 has a communication I/F unit 51, an operation inputting unit 52, a screen displaying unit 53, a storing unit 54, and a processor 55, as major function units.

The communication I/F unit 51, the operation inputting unit 52 and the screen displaying unit 53 have the same functions as the communication I/F unit 11, the operation inputting unit 12 and the screen displaying unit 13 shown in Fig. 1 in the first exemplary embodiment.

The storing unit 54 is formed by a storage device such as a hard disk and a semiconductor memory, and has a function of storing processing information necessary for various kinds of processing by the processor 55 and a program 54P. The program 54P, which is a program loaded into the processor 55 and executed to realize various kinds of processing units, is previously loaded from an external device (not shown) or a computer-readable storage medium (not shown) via a data input/output function such as the communication I/F unit 51, and is stored into the storing unit 54. Major processing information stored by the storing unit 54 includes first loss data 54A, second loss data 54G, difference factor information 54I, a first risk amount 54H, a second risk amount 54J, a coefficient table 54B, and interim information 54C.

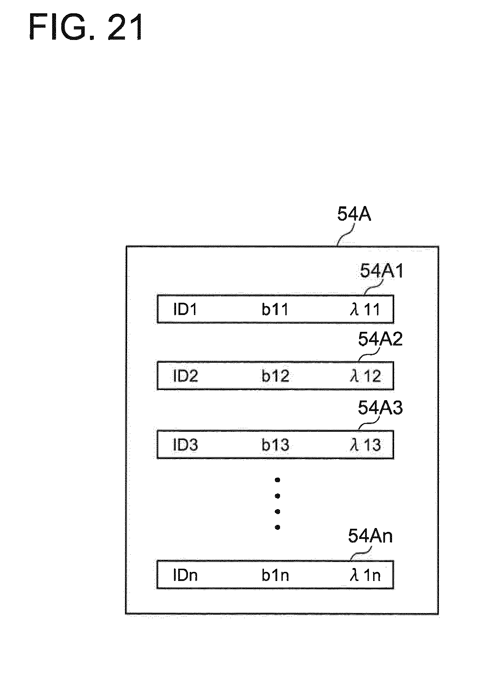

As well as the loss data 14A shown in Fig. 1 in the first exemplary embodiment, the first loss data 54A is data including a loss amount and loss occurrence frequency. Fig. 21 shows an example of the configuration of the loss data 54A. The loss data 54A of this example is composed of n loss data 54A1 to 54An in total. Each of the loss data has an identifier (an ID) for uniquely identifying loss data, a loss amount b, and loss occurrence frequency λ.

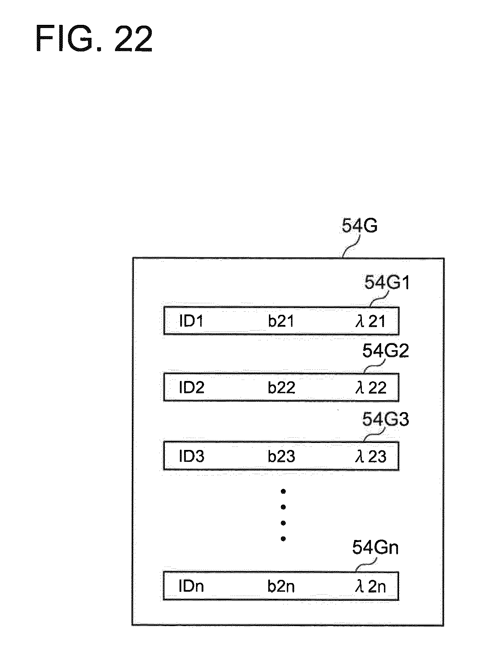

As well as the first loss data 54A, the second loss data 54G is data including a loss amount and loss occurrence frequency. Fig. 22 shows an example of the configuration of the loss data 54G. The loss data 54G of this example is composed of n loss data 54G1 to 54Gn in total corresponding one-to-one to the first loss data 54A. Each of the loss data has the identifier (an ID), loss amount b and loss occurrence frequency λ of the corresponding first loss data.

The first loss data 54A and the second loss data 54G may have any relation. For example, the first loss data 54A may be loss data used to weigh a risk amount in the previous period, and the second loss data 54G may be loss data used to weigh a risk amount in the current period. The first and second loss data may be loss data used not only in consecutive periods but also in separate periods.

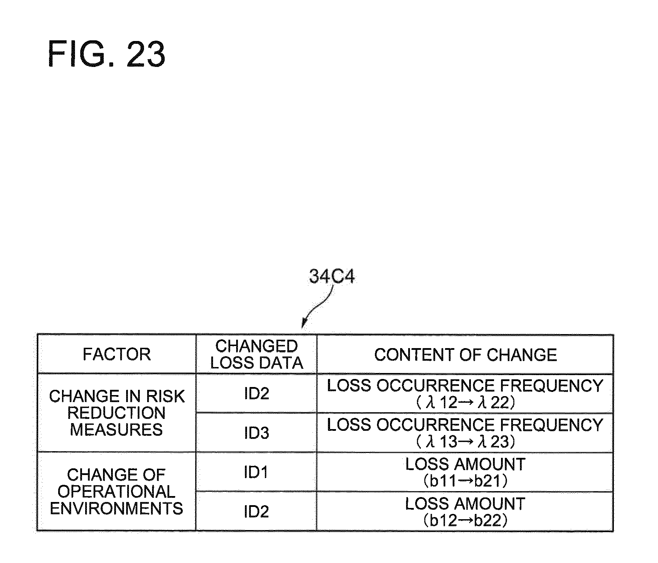

The difference factor information 54I is information representing the factor of a difference between the first loss data 54A and the second loss data 54G. Fig. 23 shows an example of the configuration of the difference factor information 54I. The difference factor information 54I of this example shows the IDs of changed loss data and the contents of change for each of two factors: change of risk reduction measures and change of operational environments. For example, information on the first line represents that loss occurrence frequency of loss data with ID2 has changed from λ12 to λ22 due to the change of risk reduction measures. Moreover, information on the second line represents that loss occurrence frequency of loss data with ID3 has changed from λ13 to λ23 due to the change of risk reduction measures. Moreover, information on the third line represents that a loss amount of loss data with ID1 has changed from b11 to b21 due to the change of operational environments. Moreover, information on the fourth line represents that a loss amount of loss data with ID2 has changed from b12 to b22 due to the change of operational environments.

The first risk amount 54H is a risk amount, for example, a 99.9% VaR amount, weighed by a risk weighing device as the target of approximation based on the first loss data 54A. The second risk amount 54J is a risk amount, for example, a 99.9% VaR amount, weighed by a risk weighing device as the target of approximation based on the second loss data 54G. The first and second risk amounts are not limited to risk amounts directly weighed by a risk weighing device, and may be risk amounts of a certain element (division) calculated in accordance with the second exemplary embodiment of the present invention.

The coefficient table 54B is the same as the coefficient table 14B in the first exemplary embodiment.

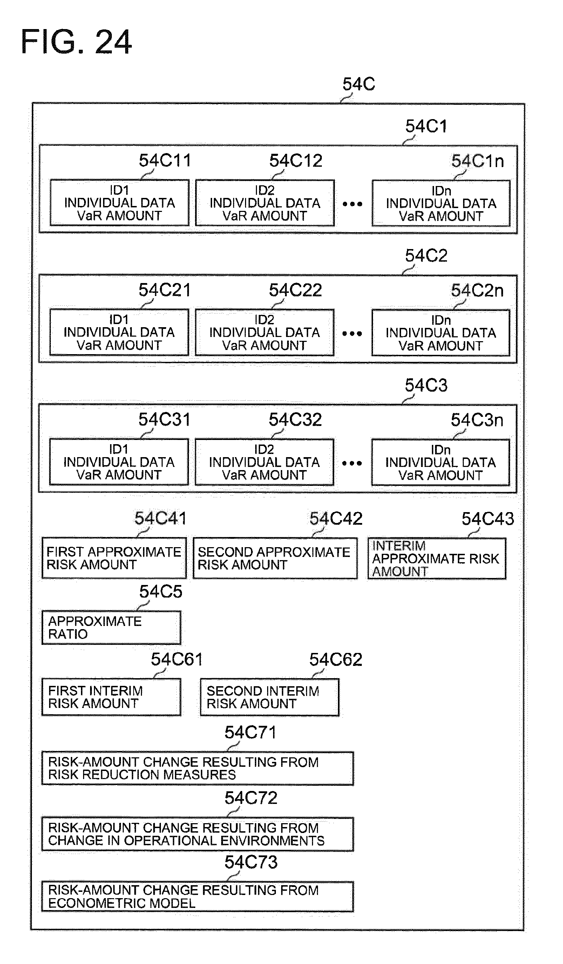

The interim information 54C is interim data or final data generated in the process of operation by the processor 55. Fig. 24 shows an example of the configuration of the interim information 54C. The interim information 54C of this example has: a first-loss-data individual data VaR amount 54C1 composed of first individual data VaR amounts 54C11 to 54C1n corresponding one-to-one to the first loss data 54A1 to 54An; a second-loss-data individual VaR amount 54C2 composed of second individual data VaR amounts 54C21 to 54C2n corresponding one-to-one to the second loss data 54G1 to 54Gn; an interim individual data VaR amount 54C3 composed of interim individual data VaR amounts 54C31 to 54C3n corresponding one-to-one to first loss data after reflection of only a change of a loss amount and loss occurrence frequency resulting from risk reduction measures in the second loss data 54G1 to 54Gn on the first loss data 54A1 to 54An; a first approximate risk amount 54C41 that is the sum of the first individual data VaR amounts 54C11 to 54C1n; a second approximate risk amount 54C42 that is the sum of the second individual data VaR amounts 54C21 to 54C2n; and an interim approximate amount 54C43 that is the sum of the interim individual data VaR amounts 54C31 to 54C3n.

Further, the interim information 54C has: an approximate ratio 54C5 that is the ratio of the first risk amount 54H to the first approximate risk amount 54C41; a first interim risk amount 54C61 that is a value obtained by multiplying the interim approximate risk amount 54C43 by the approximate ratio 54C5; a second interim risk amount 54C62 that is a value obtained by multiplying the second approximate risk amount 54C42 by the approximate ratio 54C5; a risk-amount change 54C71 resulting from risk reductions measures, which is a risk amount obtained by subtracting the first risk amount 54H from the first interim risk amount 54C61; a risk-amount change 54C72 resulting from change of operational environments, which is a risk amount obtained by subtracting the first interim risk amount 54C61 from the second interim risk amount 54C62; and a risk-amount change 54C73 resulting from an econometric model, which is a risk amount obtained by subtracting the second interim risk amount 54C62 from the second risk amount 54J.

The processor 55 has a microprocessor such as a CPU and a peripheral circuit thereof, and has a function of loading the program 54P from the storing unit 54 and executing to make the hardware and the program 54P work in cooperation and realize various kinds of processing units. Major processing units realized by the processor 55 are an input storing unit 55A, an individual data VaR amount calculating unit 55B, a cumulating unit 55C, a ratio calculating unit 55H, an interim risk amount calculating unit 55I, a difference calculating unit 55J, and an outputting unit 55D.

The input storing unit 55A has a function of inputting the first loss data 54A, the second loss data 54G, the difference factor information 54I, the first risk amount 54H, the second risk amount 54J and the coefficient table 54B from the communication I/F unit 51 or the operation inputting unit 52 and storing into the storing unit 54.

The individual data VaR amount calculating unit 55B has a function of: loading the first loss data 54A, the second loss data 54G, the difference factor information 54I and the coefficient table 54B from the storing unit 54; calculating, for each loss data 54Ai included in the loss data 54A, the value of multiplication of a coefficient held in the coefficient table 54B in association with loss occurrence frequency λi included in the loss data and a loss amount bi included in the loss data; and storing as the first individual data VaR amounts 54C11 to 54C1n into the storing unit 54. Moreover, the individual data VaR amount calculating unit 55B has a function of: calculating, for each loss data included in the second loss data, the value of multiplication of a coefficient held in the coefficient table 54B in association with loss occurrence frequency λi included in the loss data and a loss amount bi included in the loss data; and storing as the second individual data VaR amounts 54C21 to 54C2n into the storing unit 54.

Further, the individual data VaR amount calculating unit 55B has a function of generating first loss data after reflection of only a change in loss amount and loss occurrence frequency resulting from risk reduction measures in the second loss data 54G1 to 54Gn on the first loss data 54A1 to 54An. For example, in a case that the difference factor information 54I is as shown in Fig. 23, the individual VaR amount calculating unit 55B changes loss occurrence frequency in the first loss data 54A2 from λ12 to λ22, and changes loss occurrence frequency in the first loss data 54A3 from λ13 to λ23. Moreover, the individual data VaR amount calculating unit 55B calculates, for each of the thus changed first loss data, the value of multiplication of a coefficient held in the coefficient table 54B in association with loss occurrence frequency included in the loss data and a loss amount bi included in the loss data, and storing as the interim individual data VaR amounts 54C31 to 54C3n into the storing unit 54.

The cumulating unit 55C has a function of loading the first individual data VaR amounts 54C11 to 54C1n from the storing unit 54 and storing the first approximate risk amount 54C41 obtained by cumulating them into the storing unit 54. Moreover, the cumulating unit 55C has a function of loading the second individual data VaR amounts 54C21 to 54C2n from the storing unit 54, and storing the second approximate risk amount 54C42 obtained by cumulating them into the storing unit 54. Moreover, the cumulating unit 55C has a function of loading the interim individual data VaR amounts 54C31 to 54C3n from the storing unit 54, and storing the interim approximate risk amount 54C43 obtained by cumulating them into the storing unit 54.

The ratio calculating unit 55H has a function of loading the first risk amount 54H and the first approximate risk amount 54C41 from the storing unit 54, and storing a value obtained by dividing the first risk amount 54H by the first approximate risk amount 54C41 as the approximate ratio 54C5 into the storing unit 54.

The interim risk amount calculating unit 55I has a function of: loading the interim approximate risk amount 54C43, the second approximate risk amount 54C42 and the approximate ratio 54C5 from the storing unit 54; calculating a value obtained by multiplying the interim approximate risk amount 54C43 by the approximate ratio 54C5 as the first interim risk amount 54C61 and also calculating a value obtained by multiplying the second approximate risk amount 54C42 by the approximate ratio 54C5 as the second interim risk amount 54C62; and storing into the storing unit 54.

The difference calculating unit 55J has a function of: loading the first risk amount 54H, the second risk amount 54J, the first interim risk amount 54C61 and the second interim risk amount 54C62 from the storing unit 54; calculating a value obtained by subtracting the first risk amount 54H from the first interim risk amount 54C61 as the risk-amount change 54C71 resulting from risk reduction measures and also calculating a risk amount obtained by subtracting the first interim risk amount 54C61 from the second interim risk amount 54C62 as the risk-amount change 54C72 resulting from change in operational environments; and storing into the storing unit 54. Moreover, the difference calculating unit 55J may have a function of calculating a risk amount obtained by subtracting the second interim risk amount 54C62 from the second risk amount 54J as the risk-amount change 54C73 resulting from an econometric model, and storing into the storing unit 54.

The outputting unit 55D has a function of loading the risk-amount change 54C71 resulting from risk reduction measures and the risk-amount change 54C72 resulting from change in operational environments from the storing unit 54, and outputting to the screen displaying unit 53, or to the outside via the communication I/F unit 51. Moreover, the outputting unit 55D may have a function of loading the risk-amount change 54C73 resulting from an econometric model from the storing unit 54, and outputting to the screen displaying unit 53, or to the outside via the communication I/F unit 51.

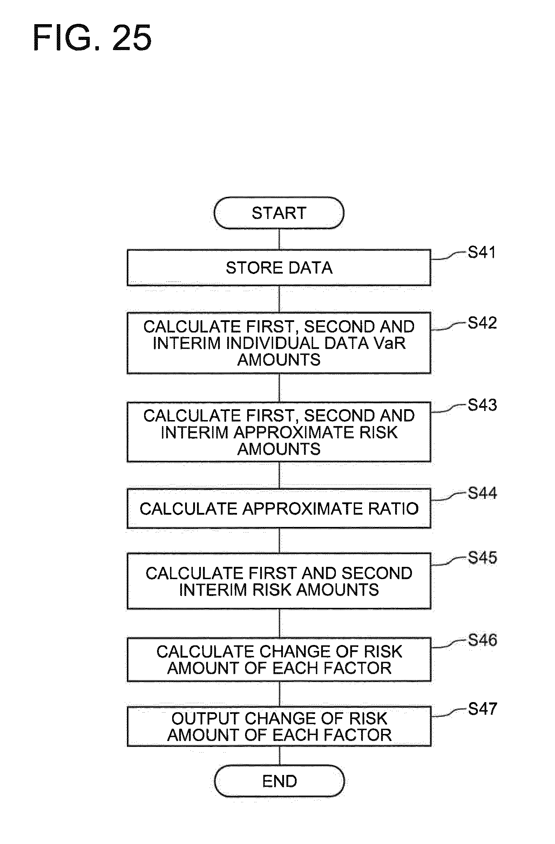

Next, with reference to Fig. 25, the operation of the risk management device 5 according to this exemplary embodiment will be described.

First, the input storing unit 55A inputs the first loss data 54A, the second loss data 54G, the difference factor information 54I, the first risk amount 54H and the second risk amount 54J from the communication I/F unit 51 or the operation inputting unit 52 and stores into the storing unit 54 (step S41).

Next, for each loss data 54Ai included in the first loss data 54A, for each loss data 54Gi included in the second loss data 54G, and for each first loss data after reflection of only a change in loss amount and loss occurrence frequency resulting from risk reduction measures in the second loss data 54G1 to 54Gn on the first loss data 54A1 to 54An, the individual data VaR amount calculating unit 55B calculates the value of multiplication of a coefficient held in the coefficient table 54B in association with loss occurrence frequency λi included in the loss data and a loss amount bi included in the loss data, as the first individual data VaR amounts 54C11 to 54C1n, the second individual data VaR amounts 54C21 to 54C2n, and the interim individual data VaR amounts 54C31 to 54C3n (step S42).

Next, the cumulating unit 55C calculates a cumulative value of the first individual data VaR amounts 54C11 to 54C1n, a cumulative value of the second individual data VaR amounts 54C21 to 54C2n and a cumulative value of the interim individual data VaR amounts 54C31 to 54C3n, as the first approximate risk amount 54C41, the second approximate risk amount 54C42 and the interim approximate risk amount 54C43, respectively (step S43).

Next, the ratio calculating unit 55H calculates a value obtained by dividing the first risk amount 54H by the first approximate risk amount 54C41 as the approximate ratio 54C5 (step S44). Although the first risk amount 54H and the first approximate risk amount 54C41 are risk amounts based on the same first loss data 54A, the first risk amount 54H is based on a risk amount weighed by a risk weighing device as the target of approximation, whereas the first approximate risk amount 54C41 is calculated by approximation using the coefficient table 54B. That is to say, econometric models are different, and therefore, they do not agree completely. The approximate ratio 54C5 has a role as a correction rate for making a risk amount obtained by approximation fit to a risk amount weighed by a risk weighing device.

Next, the interim risk amount calculating unit 55I calculates a value obtained by multiplying the interim approximate risk amount 54C43 by the approximate ratio 54C5 and a value obtained by multiplying the second approximate risk amount 54C42 by the approximate ratio 54C5, as the first interim risk amount 54C61 and the second interim risk amount 54C62, respectively (step S45). The first interim risk amount 54C61 is the result of correcting, by using the approximate ratio 54C5, the interim approximate risk amount 54C43 based on loss data obtained by reflecting only a change resulting from risk reduction measures on the first loss data 54A, and therefore, becomes an approximate value of a risk amount weighed by a risk weighing device based on loss data obtained by reflecting only a change resulting from risk reduction measures on the first loss data 54A. The second interim risk amount 54C62 is the result of correcting, by using the approximate ratio 54C5, the second approximate risk amount 54C42 based on the second loss data 54G, and therefore, becomes an approximate value of a risk amount weighed by a risk weighing device based on the second loss data 54G.

Next, the difference calculating unit 55J calculates a risk amount as a result of subtracting the first risk amount 54H from the first interim risk amount 54C61 and a risk amount as a result of subtracting the first interim risk amount 54C61 from the second interim risk amount 54C62, as the risk-amount change 54C71 resulting from risk reduction measures and the risk-amount change 54C72 resulting from change in operational environments, respectively (step S46). At this moment, the difference calculating unit 55J may calculate a risk amount as a result of subtracting the second interim risk amount 54C62 from the second risk amount 54J as the risk-amount change 54C73 resulting from an econometric model.

Finally, the outputting unit 55D outputs the risk-amount change 54C71 resulting from risk reduction measures and the risk-amount change 54C72 resulting from change in operational environments to the screen displaying unit 53, or to the outside via the communication I/F unit 51 (step S47). At this moment, the outputting unit 55D may output the risk-amount change 54C73 resulting from an econometric model to the screen displaying unit 53, or to the outside via the communication I/F unit 51 (step S47).

Thus, according to this exemplary embodiment, it is possible, by utilizing the function of approximating a VaR based on loss data, to analyze the factor of change of a VaR amount with a small amount of calculation. This is because it is possible by approximation to obtain a risk amount based on interim loss data as a result of reflecting only a change in loss amount and loss occurrence frequency due to a specific factor on first loss data, and therefore, it is possible to make the amount of calculation much less than in the case of performing the same calculation by using a risk weighing device.

In this exemplary embodiment, changes due to three factors are calculated: a change resulting from risk reduction measures, a change resulting from change in operational environments, and a change resulting from an econometric model. However, the present invention is not limited thereto, and can be applied to a case of obtaining only a change resulting from one specific factor, such as only a change resulting from risk reduction measures or only a change resulting from change in operational environments. Moreover, for example, by subdividing risk reduction measures, it is possible to apply the present invention to a case of separating into more detailed factors.

Although the present invention has been described above with exemplary embodiments, the present invention is not limited to the exemplary embodiments, and can be modified in various manners. For example, the present invention can be applied to risk other than operational risk, such as credit risk relating to margin trading like loan service and market risk relating to exchange trading and interest trading.

The present invention is based upon and claims the benefit of priority from Japanese patent application No. 2011-072744, filed on March 29, 2011, the disclosure of which is incorporated herein in its entirety by reference.

The present invention can be utilized for calculating a risk amount by a simple method from loss data including a loss amount and loss occurrence frequency, and for performing allocation of capital, component analysis, or the like.

The whole or part of the exemplary embodiments disclosed above can be described as, but not limited to, the following supplementary notes.

### (Supplementary Note 1)

A risk management device comprising:
a storing means for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter; and
an individual VaR amount calculating means for calculating multiplication values, each of which is calculated for each of the loss data and is a multiplication value of the coefficient held in the coefficient table in association with the loss occurrence frequency included in the loss data and the loss amount included in the loss data.

### (Supplementary Note 2)

The risk management device according to Supplementary Note 1, comprising a cumulating means for calculating a cumulative value of the multiplication values calculated for the respective loss data.

### (Supplementary Note 3)

A risk management device comprising:
a storing means for, when referring to a unit that a risk weighing device using loss distribution approach weighs a risk amount as a weighing unit and referring to components composing the weighing unit as elements, storing element-by-element loss data each including a loss amount and loss occurrence frequency, a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, and a risk amount weighed by the risk weighing device for the weighing unit;
an individual VaR amount calculating means for calculating multiplication values, each of which is calculated for each of the loss data and is a multiplication value of the coefficient held in the coefficient table in association with the loss occurrence frequency included in the loss data and the loss amount included in the loss data;
a cumulating means for calculating a cumulative value of the multiplication values calculated for all the loss data relating to the weighing unit, and a cumulative value of the multiplication values calculated for all the loss data relating to each of the elements; and
an element-by-element risk amount calculating means for calculating a risk amount in the risk amount calculated for the weighing unit by the risk weighing device as a risk amount of a specific element of the elements, the risk amount of the specific element being corresponding to a ratio of a cumulative value of the multiplication values calculated for all the loss data relating to the specific element to the cumulative value of the multiplication values calculated for all the loss data relating to the weighing unit.

### (Supplementary Note 4)

A risk management device comprising:
a storing means for storing one or more first scenario data each including a loss amount and loss occurrence frequency, one or more second scenario data each obtained by changing at least one of the loss amount and the loss occurrence frequency in the first scenario data, and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter;
an individual data VaR amount calculating means for calculating, for each of the first and second scenario data, a multiplication value of the coefficient held in the coefficient table in association with the loss occurrence frequency included in the scenario data and the loss amount included in the scenario data; and
a difference calculating means for calculating, for each combination of the first scenario data and the second scenario data obtained by changing at least one of the loss amount and the loss occurrence frequency in the first scenario data, a difference value between the multiplication value relating to the first scenario data and the multiplication value relating to the second scenario data.

### (Supplementary Note 5)

A risk management device comprising:
a storing means for storing one or more first loss data each including a loss amount and loss occurrence frequency, a first risk amount weighed by a risk weighing device based on the first loss data, one or more second loss data each including a loss amount and loss occurrence frequency, and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter;
an individual data VaR amount calculating means for calculating, for each of the first and second loss data, a multiplication value of the coefficient held in the coefficient table in association with the loss occurrence frequency included in the loss data and the loss amount included in the loss data;
a cumulating means for calculating first and second approximate risk amounts obtained by cumulating the calculated multiplication values for the first and second loss data, respectively;
a ratio calculating means for calculating a ratio of the first risk amount to the first approximate risk amount as an approximate ratio;
a second risk amount calculating means for calculating a value obtained by multiplying the second approximate risk amount by the approximate ratio as a second risk amount; and
a difference calculating means for calculating a difference between the first risk amount and the second risk amount as a risk-amount change resulting from a difference between the first loss data and the second loss data.

### (Supplementary Note 6)

A risk management device comprising:
a storing means for storing one or more first loss data each including a loss amount and loss occurrence frequency, a first risk amount weighed by a weighing device based on the first loss data, one or more second loss data each including a loss amount and loss occurrence frequency, difference factor information between the first loss data and the second loss data, and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter;
an individual data VaR amount calculating means for calculating, for each of the first loss data and for each of interim loss data obtained by reflecting only a change of the loss amount and the loss occurrence frequency due to a specific factor in each of the second loss data on the first loss data, calculating a multiplication value of the coefficient held in the coefficient table in association with the loss occurrence frequency included in the loss data and the loss amount included in the loss data;
a cumulating means for calculating a first approximate risk amount and an interim approximate risk amount obtained by cumulating the calculated multiplication values for the first loss data and for the interim loss data, respectively;
a ratio calculating means for calculating a ratio of the first risk amount to the first approximate risk amount as an approximate ratio;
an interim risk amount calculating means for calculating a value obtained by multiplying the interim approximate risk amount by the approximate ratio as an interim risk amount; and
a difference calculating means for calculating a difference between the first risk amount and the interim risk amount as a risk-amount change resulting from the specific factor between the first loss data and the second loss data.

### (Supplementary Note 7)

A risk management method executed by a risk management device which has a storing means for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, and which has an individual data VaR amount calculating means,
the risk management method comprising:
by the individual data VaR amount calculating means, calculating multiplication values, each of which is calculated for each of the loss data and is a multiplication value of the coefficient held in the coefficient table in association with the loss occurrence frequency included in the loss data and the loss amount included in the loss data.

### (Supplementary Note 8)

A computer program comprising instructions for causing a computer, which has a storing means for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, to function as:
an individual VaR amount calculating means for calculating multiplication values, each of which his calculated for each of the loss data and is a multiplication value of the coefficient held in the coefficient table in association with the loss occurrence frequency included in the loss data and the loss amount included in the loss data.

### DESCRIPTION OF REFERENCE NUMERALS

- 1, 2, 3, 4, 5: risk management device
- 11, 21, 31, 41, 51: communication I/F unit
- 12, 22, 32, 42, 52: operation inputting unit
- 13, 23, 33, 43, 53: screen displaying unit
- 14, 24, 34, 44, 54: storing unit
- 15, 25, 35, 45, 55: processor

## Claims

1. A risk management device comprising:
a memory for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter; and
a processor connected to the memory,
wherein the processor is programmed to calculate multiplication values, each of which is calculated for each of the loss data and is a multiplication value of the coefficient held in the coefficient table in association with the loss occurrence frequency included in the loss data and the loss amount included in the loss data.

2. The risk management device according to Claim 1, wherein the processor is further programmed to calculate a cumulative value of the multiplication values calculated for the respective loss data.

3. The risk management device according to Claim 1, wherein:
referring to a unit that a risk weighing device using loss distribution approach weighs a risk amount as a weighing unit and referring to components composing the weighing unit as elements, the memory is configured to store the loss data by element and further configured to store a risk amount weighed by the risk weighing device for the weighing unit; and
the processor is further programmed to:
calculate a cumulative value of the multiplication values calculated for all the loss data relating to the weighing unit, and a cumulative value of the multiplication values calculated for all the loss data relating to each of the elements; and
calculate a risk amount in the risk amount calculated for the weighing unit by the risk weighing device as a risk amount of a specific element of the elements, the risk amount of the specific element being corresponding to a ratio of a cumulative value of the multiplication values calculated for all the loss data relating to the specific element to the cumulative value of the multiplication values calculated for all the loss data relating to the weighing unit.

4. The risk management device according to Claim 1, wherein:
the memory is configured to store the loss data as first scenario data, and also configured to store second scenario data each obtained by changing at least one of the loss amount and the loss occurrence frequency in each of the first scenario data;
the processor is programmed to, in calculation of the multiplication values, for each of the first and second scenario data, calculate a multiplication value of the coefficient held in the coefficient table in association with the loss occurrence frequency included in the scenario data and the loss amount included in the scenario data; and
the processor is further programmed to, for each combination of the first scenario data and the second scenario data obtained by changing at least one of the loss amount and the loss occurrence frequency in the first scenario data, calculate a difference value between the multiplication value relating to the first scenario data and the multiplication value relating to the second scenario data.

5. The risk management device according to Claim 1, wherein:
the memory is configured to store the loss data as first loss data, and also store a first risk amount weighed by a risk weighing device based on the first loss data and second loss data each including a loss amount and loss occurrence frequency;
the processor is programmed to, in calculation of the multiplication values, for each of the first and second loss data, calculate a multiplication value of the coefficient held in the coefficient table in association with the loss occurrence frequency included in the loss data and the loss amount included in the loss data; and
the processor is further programmed to:
calculate first and second approximate risk amounts obtained by cumulating the calculated multiplication values for the first and second loss data, respectively;
calculate a ratio of the first risk amount to the first approximate risk amount as an approximate ratio;
calculate a value obtained by multiplying the second approximate risk amount by the approximate ratio as a second risk amount; and
calculate a difference between the first risk amount and the second risk amount as a risk-amount change resulting from a difference between the first loss data and the second loss data.

6. The risk management device according to Claim 1, wherein:
the memory is configured to store the loss data as first loss data, and also configured to store a first risk amount weighed by a weighing device based on the first loss data, second loss data each including a loss amount and loss occurrence frequency, and difference factor information between the first loss data and the second loss data;
the processor is programmed to, in calculation of the multiplication values, for each of the first loss data and for each of interim loss data obtained by reflecting only a change of the loss amount and the loss occurrence frequency due to a specific factor in each of the second loss data on the first loss data, calculate a multiplication value of the coefficient held in the coefficient table in association with the loss occurrence frequency included in the loss data and the loss amount included in the loss data; and
the processor is further programmed to:
calculate a first approximate risk amount and an interim approximate risk amount obtained by cumulating the calculated multiplication values for the first loss data and for the interim loss data, respectively;
calculate a ratio of the first risk amount to the first approximate risk amount as an approximate ratio;
calculate a value obtained by multiplying the interim approximate risk amount by the approximate ratio as an interim risk amount; and
calculate a difference between the first risk amount and the interim risk amount as a risk-amount change resulting from the specific factor between the first loss data and the second loss data.

7. A risk management method executed by a risk management device which includes a memory for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, and which includes a processor connected to the memory,
the risk management method comprising:
by the processor, calculating multiplication values, each of which is calculated for each of the loss data and is a multiplication value of the coefficient held in the coefficient table in association with the loss occurrence frequency included in the loss data and the loss amount included in the loss data.

8. The risk management method according to Claim 7, further comprising:
by the processor, calculating a cumulative value of the multiplication values calculated for the respective loss data.

9. The risk management method according to Claim 7, further comprising:
by the memory, referring to a unit that a risk weighing device using loss distribution approach weighs a risk amount as a weighing unit and referring to components composing the weighing unit as elements, storing the loss data by element and further storing a risk amount weighed by the risk weighing device for the weighing unit; and
by the processor:
calculating a cumulative value of the multiplication values calculated for all the loss data relating to the weighing unit, and a cumulative value of the multiplication values calculated for all the loss data relating to each of the elements; and
calculating a risk amount in the risk amount calculated for the weighing unit by the risk weighing device as a risk amount of a specific element of the elements, the risk amount of the specific element being corresponding to a ratio of a cumulative value of the multiplication values calculated for all the loss data relating to the specific element to the cumulative value of the multiplication values calculated for all the loss data relating to the weighing unit.

10. The risk management method according to Claim 7, further comprising:
by the memory, storing the loss data as first scenario data, and also storing second scenario data each obtained by changing at least one of the loss amount and the loss occurrence frequency in each of the first scenario data; and
by the processor:
in calculation of the multiplication values, for each of the first and second scenario data, calculating a multiplication value of the coefficient held in the coefficient table in association with the loss occurrence frequency included in the scenario data and the loss amount included in the scenario data; and
for each combination of the first scenario data and the second scenario data obtained by changing at least one of the loss amount and the loss occurrence frequency in the first scenario data, calculating a difference value between the multiplication value relating to the first scenario data and the multiplication value relating to the second scenario data.

11. The risk management method according to Claim 7, further comprising:
by the memory, storing the loss data as first loss data, and also storing a first risk amount weighed by a risk weighing device based on the first loss data and second loss data each including a loss amount and loss occurrence frequency; and
by the processor:
in calculation of the multiplication values, for each of the first and second loss data, calculating a multiplication value of the coefficient held in the coefficient table in association with the loss occurrence frequency included in the loss data and the loss amount included in the loss data;
calculating first and second approximate risk amounts obtained by cumulating the calculated multiplication values for the first and second loss data, respectively;
calculating a ratio of the first risk amount to the first approximate risk amount as an approximate ratio;
calculating a value obtained by multiplying the second approximate risk amount by the approximate ratio as a second risk amount; and
calculating a difference between the first risk amount and the second risk amount as a risk-amount change resulting from a difference between the first and second loss data.

12. The risk management method according to Claim 7, wherein:
by the memory, storing the loss data as first loss data, and also storing a first risk amount weighed by a weighing device based on the first loss data, second loss data each including a loss amount and loss occurrence frequency, and difference factor information between the first loss data and the second loss data;
by the processor:
in calculation of the multiplication values, for each of the first loss data and for each of interim loss data obtained by reflecting only a change of the loss amount and the loss occurrence frequency due to a specific factor in each of the second loss data on the first loss data, calculating a multiplication value of the coefficient held in the coefficient table in association with the loss occurrence frequency included in the loss data and the loss amount included in the loss data;
calculating a first approximate risk amount and an interim approximate risk amount obtained by cumulating the calculated multiplication values for the first loss data and for the interim loss data, respectively;
calculating a ratio of the first risk amount to the first approximate risk amount as an approximate ratio;
calculating a value obtained by multiplying the interim approximate risk amount by the approximate ratio as an interim risk amount; and
calculating a difference between the first risk amount and the interim risk amount as a risk-amount change resulting from the specific factor between the first and second loss data.

13. A computer program comprising instructions for causing a processor, which is connected to a memory for storing loss data each including a loss amount and loss occurrence frequency and a coefficient table holding a coefficient in association with the loss occurrence frequency, the coefficient being equal to a value of an occurrence number at a lower α% point (α is a predetermined constant) in a cumulative distribution function of a probability distribution with the loss occurrence frequency as a parameter, to perform operations including:
calculating multiplication values, each of which his calculated for each of the loss data and is a multiplication value of the coefficient held in the coefficient table in association with the loss occurrence frequency included in the loss data and the loss amount included in the loss data.
